# EUROPÄISCHE PATENTANMELDUNG

(11) **EP 0 816 442 A2**
(43) Veröffentlichungstag der Anmeldung: **07.01.1998**
(21) Anmeldenummer: 97810382.8
(22) Anmeldetag: 17.06.1997
(51) Int. Cl.: C09D 5/03, C09D 7/12

(54) **Stabilisatoren für Pulverlacke**

(30) Priorität: 25.06.1996 CH 1590/96; 26.11.1996 CH 2908/96
(71) Anmelder: Ciba Specialty Chemicals Holding Inc., 4057 Basel (CH)
(72) Erfinder: Laver, Hugh Stephen, 4153 Reinach (CH)

(57) **Zusammenfassung**

Es werden Pulverlackzusammensetzungen enthaltend a) ein organisches filmbildendes Bindemittel, und b) als Stabilisator i) mindestens eine Verbindung der Formel I 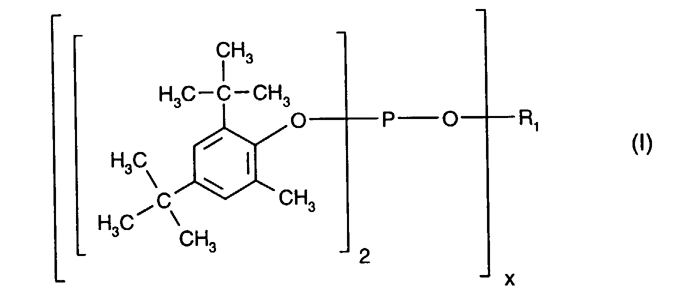 worin x bevorzugt die Zahl 1 bedeutet und R₁ bevorzugt C₁-C₄-Alkyl darstellt; oder ii) mindestens eine Verbindung aus der Gruppe der sterisch gehinderten Amine, und iii) mindestens eine Verbindung aus der Gruppe der organischen Phosphite oder Phosphonite, beschrieben. Mit so stabilisierten Pulverlackzusammensetzungen wird die Verfärbung der Lacke während der thermischen Härtung, insbesondere Gasofenhärtung, vermindert.

## Beschreibung

Die vorliegende Erfindung betrifft Pulverlackzusammensetzungen enthaltend ein organisches filmbildendes Bindemittel und als Stabilisator eine bestimmte Gruppe von Phosphiten oder ein Gemisch bestehend aus mindestens zwei verschiedenen Stabilisatortypen, sowie die Verwendung derselben zur Verminderung der Verfärbung von thermisch härtbaren Pulverlacken.

Die Pulverlackierung ist eine bekannte Technologie und beispielsweise in "Ullmann's Encyclopedia of Industrial Chemistry, Fifth, Completely Revised Edition, Volume A 18", Seiten 438 bis 444 (1991) beschrieben. In der Pulverlackierung wird generell ein Pulver unter Luftzufuhr fluidisiert, elektrostatisch aufgeladen und auf ein geerdetes, bevorzugt metallisches Substrat aufgebracht. Anschliessend wird das Substrat erhitzt, wobei das haftende Pulver schmilzt, zusammenfliesst und an der Metalloberfläche einen geschlossenen Film bildet. Weil bei der Pulverlackierung auf Lösungsmittel verzichtet wird, ist diese Technologie speziell umweltfreundlich.

Die Härtung der Pulverlackzusammensetzungen bei erhöhter Temperatur, insbesondere in einem Gasofen, verläuft nicht ohne Schwierigkeiten. Die im Gasofen enthaltenen Stickoxid-Gase verursachen oft eine unerwünschte Verfärbung des Lackes.

Im Stand der Technik werden Pulverlackzusammensetzungen mit einer Mischung von einem sterisch gehinderten Phenol, wie beispielsweise dem Octadecylester der 3-(3,5-Di-tert-butyl-4-hydroxyphenyl)propionsäure, und einem organischen Phosphit, wie beispielsweise Tris-(2,4-di-tert-butyl-phenyl)phosphit, stabilisiert. Mit dieser Stabilisierung wird jedoch bei der Härtung der Pulverlackzusammensetzung bei erhöhter Temperatur, insbesondere in einem Gasofen eine starke unerwünschte Verfärbung des Lackes beobachtet. Diese Verfärbung kann etwas unterdrückt werden, wenn auf das sterisch gehinderte Phenol verzichtet wird und nur mit einem organischen Phosphit stabilisiert wird. Die Stabilisierung des Pulverlackes mit nur einem organischen Phosphit hat aber den Nachteil, dass die Stabilität des Lackes gegenüber oxidativen Angriffen stark vermindert wird.

Es ist auch wünschenswert, Pulverlacke gegen Ueberbrennung zu stabilisieren. Eine solche Ueberbrennung kann beispielsweise stattfinden, wenn das Förderband beim geheizten Ofen stehen bleibt, oder wenn Teile wegen Lackdefekten nochmals lackiert werden müssen.

Gehinderte Amine, darunter insbesondere Verbindungen enthaltend 2,2,6,6-Tetramethylpiperidylgruppen, sind als Lichtschutzmittel ("Hindered Amine Light Stabilizers"; HALS) bekannt.

GB-A-2 265 377 offenbart Phosphite und Phosphonite mit HALS-Strukturelementen als Stabilisatoren für Pulverlacke.

Die bekannten Stabilisatoren genügen nicht in jeder Hinsicht den hohen Anforderungen, die ein Stabilisator oder ein Gemisch von Stabilisatoren erfüllen soll, insbesondere hinsichtlich der Verfärbung von thermisch härtbaren, insbesondere in Gasöfen härtbaren, Pulverlackzusammensetzungen.

Es wurde nun gefunden, dass eine bestimmte Gruppe von Phosphiten oder ein Gemisch bestehend aus mindestens zwei verschiedenen Stabilisatortypen sich besonders gut als Stabilisatoren zur Verminderung der Verfärbung von thermisch, insbesondere in Gasöfen, härtbaren Pulverlackzusammensetzungen eignet.

Die vorliegende Erfindung betrifft daher Pulverlackzusammensetzungen enthaltend
a) ein organisches filmbildendes Bindemittel, und
b) als Stabilisator
   (i) mindestens eine Verbindung der Formel I 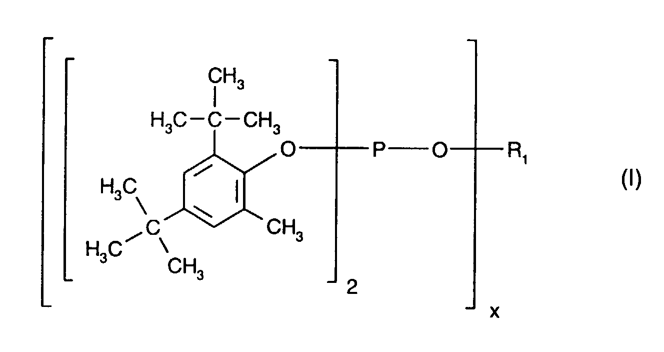 worin x 1, 2 oder 3 ist, und
      wenn x 1 ist,
      R₁ C₁-C₃₀-Alkyl, mit Halogen, -COOR₂, -CN, -NR₃R₄ oder -CONR₃R₄ substituiertes C₁-C₁₈-Alkyl; durch -NR₅-, Sauerstoff oder Schwefel unterbrochenes C₂-C₁₈-Alkyl; C₃-C₁₈-Alkenyl, C₅-C₁₂-Cycloalkyl, Phenyl-C₁-C₄-alkyl, unsubstituiertes oder mit C₁-C₁₂-Alkyl, Halogen, Phenyl-C₁-C₄-alkyl oder/und C₁-C₄-Alkoxy substituiertes Phenyl; Naphthyl, einen Rest der Formel 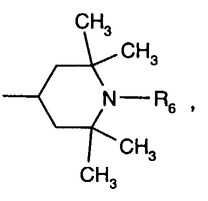 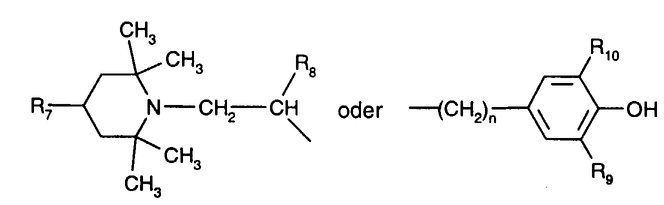 darstellt,
      R₂, R₃, R₄ und R₅ unabhängig voneinander Wasserstoff, C₁-C₁₈-Alkyl, C₅-C₁₂-Cycloalkyl oder Phenyl-C₁-C₄-alkyl bedeuten,
      R₆ Wasserstoff, Methyl, Allyl oder Benzyl darstellt,
      R₇ Wasserstoff oder -OR₁₁ bedeutet,
      R₈ Wasserstoff oder Methyl ist,
      R₉ und R₁₀ unabhängig voneinander Wasserstoff oder C₁-C₈-Alkyl darstellen,
      R₁₁ Wasserstoff oder C₁-C₃₀-Alkyl bedeutet, und
      n 3 bis 6 darstellt, mit der Bedingung, dass R₁ keinen Phenylrest darstellt, der in beiden ortho Positionen zum Kohlenstoffatom, welches an das Sauerstoffatom gebunden ist, substituiert ist; und
      wenn x 2 ist,
      R₁ C₂-C₁₈-Alkylen, durch -NR₅-, Sauerstoff oder Schwefel unterbrochenes C₂-C₁₈-Alkylen; oder einen Rest 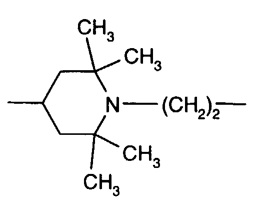 darstellt, und
      wenn x 3 ist,
      R₁ C₃-C₁₂-Alkantriyl oder N[(CH₂)ₘ-]₃ bedeutet, und
      m 1 bis 4 darstellt; oder
   ii) mindestens eine Verbindung aus der Gruppe der sterisch gehinderten Amine, und
   iii) mindestens eine Verbindung aus der Gruppe der organischen Phosphite oder Phosphonite.

R₁ als C₁-C₃₀-Alkyl kann linear oder verzweigt sein und bedeutet beispielsweise Methyl, Ethyl, Isomere von Propyl, Butyl, Pentyl, Hexyl, Heptyl, Octyl, Nonyl, Decyl, Dodecyl, Tetradecyl, Heptadecyl, Octadecyl, Icosyl, Tetracosyl oder Triacontyl. Insbesondere bedeutet R₁ als Alkyl C₁-C₂₄-Alkyl, ganz besonders C₁-C₁₈-Alkyl, bevorzugt C₁-C₁₂-Alkyl, z.B. C₁-C₄-Alkyl.

R₂, R₃, R₄ und R₅ als C₁-C₁₈-Alkyl können linear oder verzweigt sein und haben z.B. die für R₁ als C₁-C₃₀-Alkyl angegebenen Bedeutungen bis zur entsprechenden Anzahl der Kohlenstoffatome. Bevorzugt ist dabei C₁-C₁₂-Alkyl, insbesondere C₁-C₄-Alkyl.

R₁ als mit Halogen substituiertes C₁-C₁₈-Alkyl kann linear oder verzweigt sein und ein- oder mehrfach, z.B. ein- bis dreifach, insbesondere ein- oder zweifach substituiert sein und bedeutet z.B. Chlormethyl, Dichlormethyl, Trichlormethyl, Chlorethyl, Dichlorethyl, Chlorpropyl, Fluormethyl, Trifluormethyl, Trifluorethyl, Trifluorpropyl usw.

R₁ als mit -COOR₂ substituiertes C₁-C₁₈-Alkyl bedeutet beispielsweise mit Methoxycarbonyl, Ethoxycarbonyl, Isomeren von Propoxycarbonyl, Butoxycarbonyl, Pentoxycarbonyl, Hexyloxycarbonyl, Heptyloxycarbonyl, Ethylhexyloxycarbonyl, Decyloxycarbonyl, Dodecyloxycarbonyl, Cyclohexyloxycarbonyl, Tolyloxycarbonyl, insbesondere Methoxy- und Ethoxycarbonyl substituiertes Methyl, Ethyl, Propyl, Butyl, Pentyl, Hexyl, Heptyl, Octyl, Nonyl, Decyl, Dodecyl oder Octadecyl. Bevorzugt ist mit Methoxycarbonyl, Ethoxycarbonyl oder insbesondere Butoxycarbonyl substituiertes Methyl und Ethyl, insbesondere Methyl.

R₁ als mit -CN substituiertes C₁-C₁₈-Alkyl bedeutet beispielsweise Cyanomethyl, Cyanoethyl, Cyanopropyl, Cyanobutyl, Cyanopentyl, Cyanohexyl, Cyanooctyl, Cyanodecyl, Cyanododecyl oder Cyanooctadecyl, insbesondere Cyanoethyl.

R₁ als mit -NR₃R₄ substituiertes C₁-C₁₈-Alkyl bedeutet beispielsweise Dimethylaminoethyl, Dimethylaminopropyl, Dimethylaminobutyl oder Diethylaminoethyl.

R₁ als mit -CONR₃R₄ substituiertes C₁-C₁₈-Alkyl steht z.B. für mit Dimethylaminocarbonyl, Diethylaminocarbonyl, Dibutylaminocarbonyl oder Ethylmethylaminocarbonyl, insbesondere Dimethyl- und Diethylaminocarbonyl substituiertes Methyl, Ethyl, Propyl, Butyl, Pentyl, Hexyl, Heptyl, Octyl, Nonyl, Decyl, Dodecyl oder Octadecyl. Bevorzugt ist mit Dimethylaminocarbonyl oder Diethylaminocarbonyl substituiertes Methyl, Ethyl und Propyl, insbesondere mit Dimethylaminocarbonyl substituiertes Propyl.

Durch -NR₅-, Sauerstoff oder Schwefel unterbrochenes C₂-C₁₈-Alkyl bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-.

Alkenyl mit 3 bis 18 Kohlenstoffatomen bedeutet einen verzweigten oder unverzweigten Rest wie beispielsweise Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 3 bis 12, insbesondere 3 bis 10, z.B. 3 bis 6, vor allem 3 bis 4 Kohlenstoffatomen.

R₁, R₂, R₃, R₄ und R₅ als C₅-C₁₂-Cycloalkyl bedeutet beispielsweise Cyclopentyl, Cyclohexyl, Cycloheptyl, Cyclooctyl, Cyclodecyl oder Cyclododecyl. Bevorzugt sind Cyclopentyl und Cyclohexyl, insbesondere Cyclohexyl.

R₁, R₂, R₃, R₄ und R₅ als Phenyl-C₁-C₄-Alkyl bedeutet beispielsweise Benzyl, 1-Phenylethyl, 2-Phenylethyl, 3-Phenylpropyl, α-Methylbenzyl oder α,α-Dimethylbenzyl. Bevorzugt ist Benzyl und 1-Phenylethyl.

R₁ als mit C₁-C₁₂-Alkyl, Halogen, Phenyl-C₁-C₄-alkyl oder/und C₁-C₄-Alkoxy substituiertes Phenyl enthält vorzugsweise 1 bis 3 Substituenten, insbesondere 1 oder 2, und ist beispielsweise Chlorphenyl, Dichlorphenyl, Trichlorphenyl, Fluorphenyl, Difluorphenyl, Tolyl, Dimethylphenyl, Mesityl, Ethylphenyl, Diethylphenyl, Isopropylphenyl, tert-Butylphenyl, Benzylphenyl, Phenylethylphenyl, Di-t-butylphenyl, Methyl-di-tert-butylphenyl, Dodecylphenyl, Methoxyphenyl, Dimethoxyphenyl, Ethoxyphenyl, Hexyloxyphenyl, Methoxyethylphenyl oder Ethoxymethylphenyl, insbesondere p-tert-Butyl-phenyl. Alkyl und Alkoxy als Phenylsubstituenten haben vorzugsweise 1 bis 4 Kohlenstoffatome und sind insbesondere Methyl, tert-Butyl oder Methoxy. Bevorzugt ist tert-Butyl-phenyl.

Halogen bedeutet beispielsweise Fluor, Chlor, Brom oder lod. Bevorzugt ist Chlor.

C₂-C₁₈-Alkylen bedeutet einen verzweigten oder unverzweigten Rest wie beispielsweise Ethylen, Propylen, Trimethylen, Tetramethylen, Pentamethylen, Hexamethylen, Heptamethylen, Octamethylen, Decamethylen, Dodecamethylen oder Octadecamethylen. Bevorzugt ist C₂-C₁₂-Alkylen, insbesondere C₂-C₈-Alkylen.

Durch Sauerstoff oder Schwefel unterbrochenes C₂-C₁₈-Alkylen bedeutet beispielsweise-CH₂-O-CH₂-, -CH₂-S-CH₂-, -CH₂-O-CH₂CH₂-O-CH₂-, -CH₂-(O-CH₂CH₂-)₂O-CH₂-, -CH₂-(O-CH₂CH₂-)₃O-CH₂- , -CH₂-(O-CH₂CH₂-)₄O-CH₂- oder -CH₂CH₂-S-CH₂CH₂-.

Alkantriyl mit 3 bis 12 Kohlenstoffatomen bedeutet beispielsweise 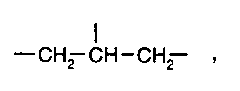 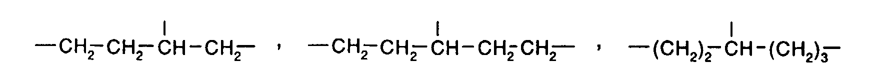 oder 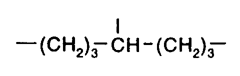 . Bevorzugt ist Glyceryl.

Von Interesse sind Pulverlackzusammensetzungen, worin die Pulverlackzusammensetzung eine thermisch, inbesondere in Gasöfen, härtbare Pulverlackzusammensetzung darstellt.

Unter dem Begriff Gasöfen werden Öfen verstanden, die durch Verbrennung von Kohlenwasserstoffen wie beispielsweise Methan, Propan, Butan, Steinkohlengas, Kohlenmonoxid, Wasserstoff oder Ölen gespiesen werden. Bei der Verbrennung der Gase bzw. Oxidation der Gase mit Luft entstehen mit dem Stickstoff, der in der Luft vorhanden ist, die für die Härtung der Pulverlackzusammensetzung unerwünschten Stickoxide.

Die vorliegende Erfindung betrifft deshalb auch bei der Härtung mit aus Verbrennungsgasen stammenden Stickoxiden in Kontakt stehende Pulverlackzusammensetzungen enthaltend die Komponenten (a) und (b).

Bevorzugt sind Pulverlackzusammensetzungen enthaltend als Komponente (b)(i) eine Verbindung der Formel I, worin, wenn x 1 ist,
R₁ C₁-C₂₀-Alkyl, mit Halogen, -COOR₂, -CN oder -NR₃R₄ substituiertes C₁-C₈-Alkyl; durch Sauerstoff oder Schwefel unterbrochenes C₂-C₈-Alkyl; C₃-C₁₈-Alkenyl, C₅-C₆-Cycloalkyl, unsubstituiertes oder mit C₁-C₁₂-Alkyl oder Phenyl-C₁-C₄-alkyl substituiertes Phenyl; Naphthyl, einen Rest der Formel 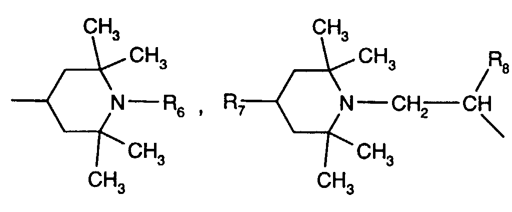 oder 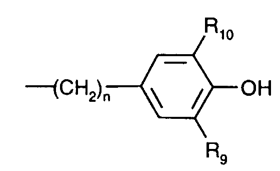 darstellt,
R₂, R₃, R₄ und R₅ unabhängig voneinander Wasserstoff, C₁-C₁₂-Alkyl, C₅-C₈-Cycloalkyl oder Phenyl-C₁-C₄-alkyl bedeuten,
R₆ Wasserstoff oder Methyl darstellt,
R₇ Wasserstoff oder -OR₁₁ bedeutet,
R₈ Wasserstoff oder Methyl ist,
R₉ und R₁₀ unabhängig voneinander Wasserstoff oder C₁-C₆-Alkyl darstellen,
R₁₁ Wasserstoff oder C₁-C₂₅-Alkyl bedeutet, und
n 3 bis 5 darstellt, und
   wenn x 2 ist,
   R₁ C₂-C₁₂-Alkylen, Sauerstoff oder Schwefel unterbrochenes C₂-C₁₂-Alkylen; oder einen
   Rest 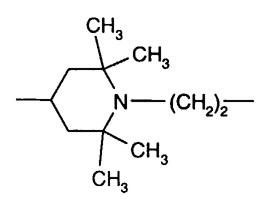 darstellt, und
   wenn x 3 ist,
   R₁ N[(CH₂)m-]₃ bedeutet, und
   m 2 darstellt.

Besonders bevorzugt sind Pulverlackzusammensetzungen enthaltend als Komponente (b)(i) eine Verbindung der Formel I, worin, wenn x 1 ist, R₁ C₁-C₄-Alkyl bedeutet.

Von Interesse sind Pulverlackzusammensetzungen enthaltend als Komponente (b)(ii) mindestens einen Rest der Formel II oder III 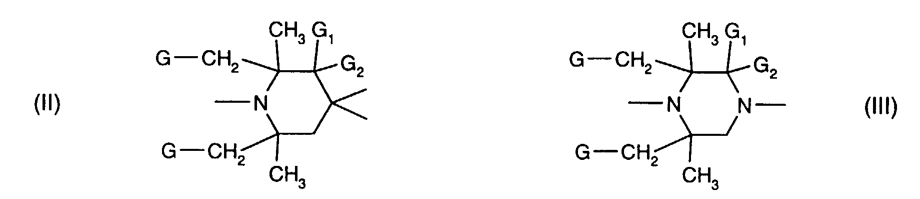 worin
G Wasserstoff oder Methyl ist, und
G₁ und G₂ Wasserstoff, Methyl oder gemeinsam Sauerstoff bedeuten.

Von besonderem Interesse sind Pulverlackzusammensetzungen enthaltend als Komponente (b)(ii) mindestens eine Verbindung aus der Gruppe der sterisch gehinderten Amine der unter (a') bis (g') beschriebenen Klasse von Verbindungen, die mindestens einen Rest der Formel II oder III enthalten.

### (a') Verbindungen der Formel lla

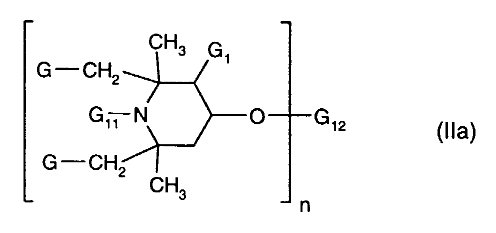

worin n eine Zahl von 1 bis 4 bedeutet,
G und G₁ unabhängig voneinander Wasserstoff oder Methyl darstellen,
G₁₁ Wasserstoff, O°, Hydroxy, NO, -CH₂CN, C₁-C₁₈-Alkyl, C₃-C₈-Alkenyl, C₃-C₈-Alkinyl, C₇-C₁₂-Aralkyl, C₁-C₁₈-Alkoxy, C₅-C₈-Cycloalkoxy, C₇-C₉-Phenylalkoxy, C₁-C₈-Alkanoyl, C₃-C₅-Alkenoyl, C₁-C₁₈-Alkanoyloxy, Benzyloxy, Glycidyl oder eine Gruppe -CH₂CH(OH)-Z bedeutet, wobei G₁₁ vorzugsweise Wasserstoff, C₁-C₄-Alkyl, Allyl, Benzyl, Acetyl oder Acryloyl ist,
Z Wasserstoff, Methyl oder Phenyl darstellt, und
wenn n 1 ist,
G12 Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 Kohlenstoffatomen, einer cycloaliphatischen Carbonsäure mit 7 bis 15 Kohlenstoffatomen, einer α,β-ungesättigten Carbonsäure mit 3 bis 5 Kohlenstoffatomen oder einer aromatischen Carbonsäure mit 7 bis 15 Kohlenstoffatomen bedeutet, wobei die Carbonsäure jeweils im aliphatischen, cycloaliphatischen oder aromatischen Teil mit 1 bis 3 -COOZ₁₂ substituiert sein kann,
Z₁₂ Wasserstoff, C₁-C₂₀-Alkyl, C₃-C₁₂-Alkenyl, C₅-C₇-Cyycloalkyl, Phenyl oder Benzyl ist, und
wenn n 2 ist,
G₁₂ C₂-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil mit 1 oder 2 Gruppen -COOZ₁₂ substituiert sein kann, und
wenn n 3 ist,
G12 einen dreiwertigen Rest einer aliphatischen, cycloaliphatischen oder aromatischen Tricarbonsäure, der im aliphatischen, cycloaliphatischen oder aromatischen Teil mit -COOZ₁₂ substituiert sein kann, einer aromatischen Tricarbaminsäure oder einer Phosphor enthaltenden Säure oder einen dreiwertigen Silylrest bedeutet, und
wenn n 4 ist,
G12 einen vierwertigen Rest einer aliphatischen, cycloaliphatischen oder aromatischen Tetracarbonsäure bedeutet.

Unter den angegebenen Carbonsäureresten sind dabei jeweils Reste der Formel (-CO₂)ₙR, wobei die Bedeutung von n oben angegeben ist, und sich die Bedeutung von R aus der angegebenenen Definition ergibt.

Bedeuten etwaige Substituenten C₁-C₁₂-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

In der Bedeutung von C₁-C₁₈-Alkyl kann G₁₁ oder G₁₂ z.B. die oben angeführten Gruppen und dazu noch beispielsweise n-Tridecyl, n-Tetradecyl, n-Hexadecyl oder n-Octadecyl darstellen.

Wenn G₁₁ C₃-C₈-Alkenyl bedeutet, so kann es sich z.B. um 1-Propenyl, Allyl, Methallyl, 2-Butenyl, 2-Pentenyl, 2-Hexenyl, 2-Octenyl oder 4-tert-Butyl-2-butenyl handeln.

G₁₁ ist als C₃-C₈-Alkinyl bevorzugt Propargyl.

Als C₇-C₁₂-Aralkyl ist G₁₁ insbesondere Phenethyl und vor allem Benzyl.

G₁₁ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet G₁₂ einen einwertigen Rest einer Carbonsäure, so stellt G12 beispielsweise einen Essigsäure-, Capronsäure-, Stearinsäure-, Acrylsäure-, Methacrylsäure-, Benzoe- oder β-(3,5-Di-tert-butyl-4-hydroxy-phenyl)-propionsäure-Rest dar.

Bedeutet G₁₂ einen einwertigen Silylrest, so stellt G₁₂ beispielsweise einen Rest der Formel -(CⱼH₂ⱼ)-Si(Z')₂Z" dar, worin j eine ganze Zahl aus dem Bereich von 2 bis 5, und Z' und Z" unabhängig voneinander C₁-C₄-Alkyl oder C₁-C₄-Alkoxy bedeuten.

Bedeutet G12 einen zweiwertigen Rest einer Dicarbonsäure, so stellt G12 beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert-butyl-4-hydroxybenzyl)-malonsäure- oder Bicycloheptendicarbonsäure-Rest oder einen Rest der Formel 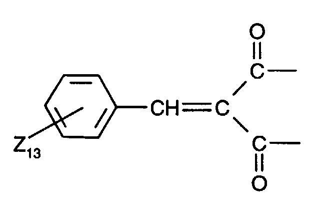 dar, worin Z₁₃ Wasserstoff, C₁-C₁₂-Alkyl oder C₁-C₁₂-Alkoxy bedeutet. Eine besonders bevorzugte Bedeutung von Z₁₃ ist Wasserstoff, C₁-C₄-Alkyl oder C₁-C₄-Alkoxy, insbesondere para C₁-C₄-Alkoxy z.B. p-Methoxy.

Stellt G₁₂ einen dreiwertigen Rest einer Tricarbonsäure dar, so bedeutet G₁₂ beispielsweise einen Trimellitsäure-, Citronensäure- oder Nitrilotriessigsäure-Rest.

Stellt G₁₂ einen vierwertigen Rest einer Tetracarbonsäure dar, so bedeutet G₁₂ beispielsweise den vierwertigen Rest von Butan-1,2,3,4-tetracarbonsäure oder von Pyromellitsäure.

Bedeutet G₁₂ einen zweiwertigen Rest einer Dicarbaminsäure, so stellt G₁₂ beispielsweise einen Hexamethylendicarbaminsäure- oder einen 2,4-Toluylen-dicarbaminsäure-Rest dar.

Bevorzugt sind Verbindungen der Formel IIa, worin G Wasserstoff ist, G₁₁ Wasserstoff oder Methyl ist, n 2 ist und G₁₂ der Diacylrest einer aliphatischen Dicarbonsäure mit 4 bis 12 Kohlenstoffatomen ist.

Beispiele für Polyalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1 ,2,2,6,6-pentamethylpiperidin
8) 1,2,2,6,6-Pentamethylpiperidin-4-yl-β-(3,5-di-tert-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6, 6-tetramethylpiperidin-4-yl-acetat
19) Trimellitsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1 -cyclohexyloxy-2,2,6,6-tetramethylpiperidin-4-yl)-sebacat
26) Hexan-1',6'-bis-(4-carbamoyloxy-1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1 ,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

Eine besonders bevorzugte Verbindung der Formel lla ist die Verbindung der Formel iiG.

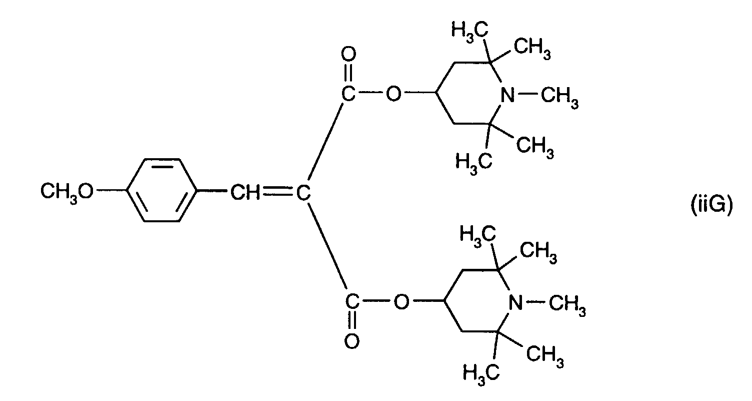

### (b') Verbindungen der Formel llb

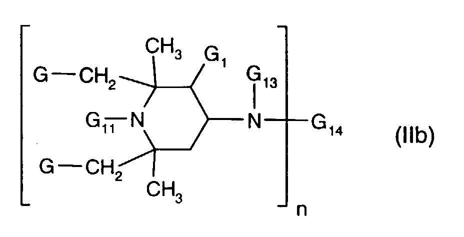

worin n die Zahl 1 oder 2 bedeutet,
G, G₁ und G₁₁ die unter (a') angegebene Bedeutung haben,
G₁₃ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C3-C5-Alkenoyl, Benzoyl oder eine Gruppe der Formel 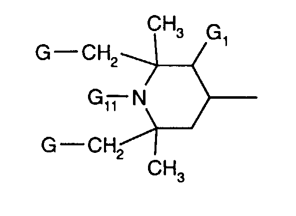 ist, und
wenn n 1 ist,
G₁₄ Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl; Glycidyl, eine Gruppe der Formel -CH2-CH(OH)-Z oder der Formel -CONH-Z ist, worin Z Wasserstoff, Methyl oder Phenyl bedeutet, und
wenn n 2 ist,
G₁₄ C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass G₁₃ nicht Alkanoyl, Alkenoyl oder Benzoyl bedeutet, G₁₄ auch 1-Oxo-C₂-C₁₂-alkylen, einen zweiwertigen Rest einer aliphatischen, cycloaliphatischen oder aromatischen Dicarbonsäure oder Dicarbaminsäure oder auch die Gruppe -CO-bedeuten kann, oder,
wenn n 1 ist,
G₁₃ und G₁₄ zusammen den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter (a') angegebene Bedeutung.

Bedeuten etwaige Substituenten C₅-C₇-Cycloalkyl, so stellen sie insbesondere Cyclohexyl dar.

Als C₇-C₈-Aralkyl ist G₁₃ insbesondere Phenylethyl oder vor allem Benzyl. Als C₂-C₅-Hydroxyalkyl ist G13 insbesondere 2-Hydroxyethyl oder 2-Hydroxypropyl.

G₁₃ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.

Bedeutet G₁₄ C₂-C₈-Alkenyl, dann handelt es sich beispielsweise um Allyl, Methallyl, 2-Butenyl, 2-Pentenyl, 2-Hexenyl oder 2-Octenyl.

G₁₄ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4'-Diphenylen dar.

Als C₆-C₁₂-Cycloalkylen ist insbesondere Cyclohexylen zu nennen.

Bevorzugt sind Verbindungen der Formel IIb, worin n 1 oder 2 ist, G Wasserstoff ist, G₁₁ Wasserstoff oder Methyl ist, G₁₃ Wasserstoff, C₁-C₁₂-Alkyl oder eine Gruppe der Formel 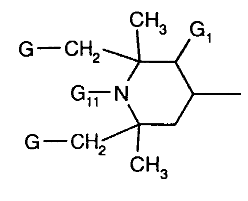 ist und G₁₄ im Fall von n=1 Wasserstoff oder C₁-C₁₂-Alkyl ist, und im Fall von n=2 C₂-C₈-Alkylen oder 1-Oxo-C₂-C₈-alkylen ist.

Beispiele für Polyalkylpiperidin-Verbindungen dieser Klasse sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicydohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 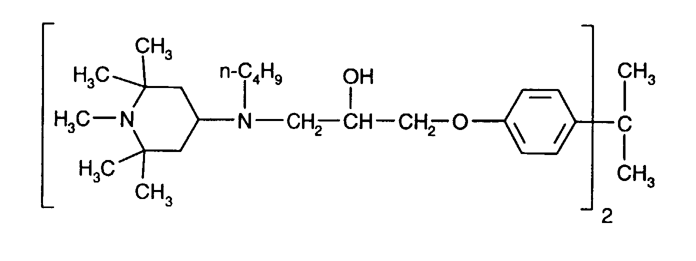
47) 4-(Bis-2-hydroxyethyl-amino)-1,2,2,6,6-pentamethylpiperidin
48) 4-(3-Methyl-4-hydroxy-5-tert-butyl-benzoesäureamido)-2,2,6,6-tetra-methylpiperidin
49) 4-Methacrylamido-1,2,2,6,6-pentamethylpiperidin

### (c') Verbindungen der Formel llc

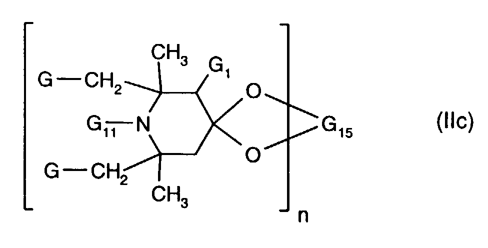

worin n die Zahl 1 oder 2 bedeutet, G, G₁ und G₁₁ die unter (a') angegebene Bedeutung haben, und
wenn n 1 ist,
G₁₅ C₂-C₈-Alkylen oder C₂-C₈-Hydroxyalkylen oder C₄-C₂₂-Acyloxyalkylen ist, und wenn n 2 ist,
G₁₅ die Gruppe (-CH₂)₂C(CH₂-)₂ bedeutet.

Bedeutet G₁₅ C₂-C₈-Alkylen oder C₂-C₈-Hydroxyalkylen, so stellt G₁₅ beispielsweise Ethylen, 1-Methyl-ethylen, Propylen, 2-Ethyl-propylen oder 2-Ethyl-2-hydroxymethylpropylen dar.

Als C₄-C₂₂-Acyloxyalkylen bedeutet G₁₅ beispielsweise 2-Ethyl-2-acetoxymethylpropylen.

Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"-dioxan)-2"-spiro-4"'-(2"',2'',6'',6"'-tetramethylpiperidin)

### (d') Verbindungen der Formeln IId, IIe und IIf, wobei Verbindungen der Formel IIf bevorzugt sind,

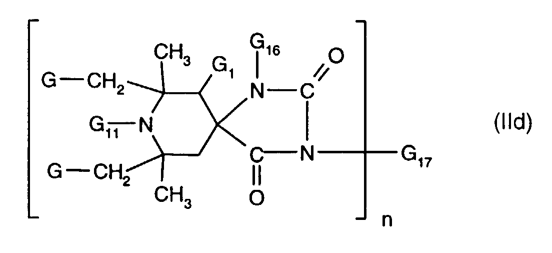

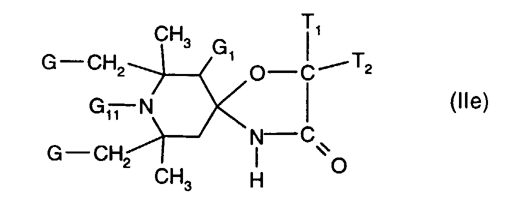

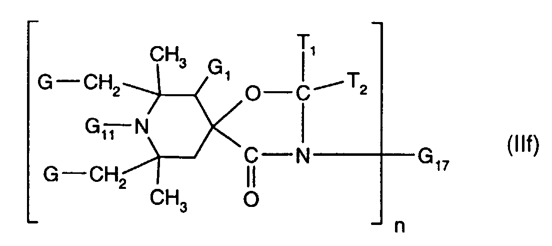

worin n die Zahl 1 oder 2 bedeutet, G, G₁ und G₁₁ die unter (a') angegebene Bedeutung haben,
G₁₆ Wasserstoff, C₁-C₁₂-Alkyl, Allyl, Benzyl, Glycidyl oder C₂-C₆-Alkoxyalkyl ist, und
wenn n 1 ist,
G₁₇ Wasserstoff, C₁-C₁₂-Alkyl, C₃-C₅-Alkenyl, C₇-C₉-Aralkyl, C₅-C₇-Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄-Alkyl oder Phenyl ist, und
wenn n 2 ist,
G₁₇ C₂-C₁₂-Alkylen, C₄-C₁₂-Alkenylen, C₆-C₁₂-Arylen, eine Gruppe -CH₂-CH(OH)-CH₂-O-D-O-CH₂-CH(OH)-CH₂-, worin D C₂-C₁₀-Alkylen, C₆-C₁₅-Arylen, C₆-C₁₂-Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist,
T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem Kohlenstoffatom an das sie gebunden sind einen C₅-C₁₄-Cycloalkanring bilden.

Bedeuten etwaige Substituenten C₁-C₁₂-Alkyl, so stellen sie z.B. Methyl, Ethyl, n-Propyl, n-Butyl, sek-Butyl, tert-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆-Alkoxyalkyl, so stellen sie z.B. Methoxymethyl, Ethoxymethyl, Propoxymethyl, tert-Butoxymethyl, Ethoxyethyl, Ethoxypropyl, n-Butoxyethyl, tert-Butoxyethyl, Isopropoxyethyl oder Propoxypropyl dar.

Stellt G₁₇ C₃-C₅-Alkenyl dar, so bedeutet G₁₇ beispielsweise 1-Propenyl, Allyl, Methallyl, 2-Butenyl oder 2-Pentenyl.

Als C₇-C₉-Aralkyl sind G₁₇, T₁ und T₂ insbesondere Phenethyl oder vor allem Benzyl. Bilden T₁ und T₂ zusammen mit dem Kohlenstoffatom einen Cycloalkanring, so kann dies z.B. ein Cyclopentan-, Cyclohexan-, Cyclooctan- oder Cyclododecanring sein.

Bedeutet G₁₇ C₂-C₄-Hydroxyalkyl, so stellt es z.B. 2-Hydroxyethyl, 2-Hydroxypropyl, 2-Hydroxybutyl oder 4-Hydroxybutyl dar.

Als C₆-C₁₀-Aryl bedeuten G₁₇, T₁ und T₂ insbesondere Phenyl, α- oder β-Naphthyl, die gegebenenfalls mit Halogen oder C₁-C₄-Alkyl substituiert sind.

Stellt G₁₇ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als C₄-C₁₂-Alkenylen bedeutet G₁₇ insbesondere 2-Butenylen, 2-Pentenylen oder 3-Hexenylen.

Bedeutet G₁₇ C₆-C₁₂-Arylen, so stellt G₁₇ beispielsweise o-, m- oder p-Phenylen, 1,4-Naphthylen oder 4,4'-Diphenylen dar.

Bedeutet Z' C₂-C₁₂-Alkanoyl, so stellt es beispielsweise Propionyl, Butyryl, Octanoyl, Dodecanoyl, aber bevorzugt Acetyl dar.

D hat als C₂-C₁₀-Alkylen, C₆-C₁₅-Arylen oder C₆-C₁₂-Cycloalkylen die unter (b') angegebene Bedeutung.

Beispiele für Polyalkylpiperidin-Verbindungen dieser Klasse sind folgende Verbindungen:
56) 3-Benzyl-1 ,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1 ,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21 -oxo-dispiro[5.1.11.2]-heneicosan
64) 2-Butyl-7,7,9,9-tetramethyl-1-oxa-4,8-diaza-3-oxo-spiro-[4.5]decan und bevorzugt:
65) 8-Acetyl-3-dodecyl-1,3,8-triaza-7,7,9,9-tetramethylspiro[4.5]-decan-2,4-dion
oder die Verbindungen der folgenden Formeln:

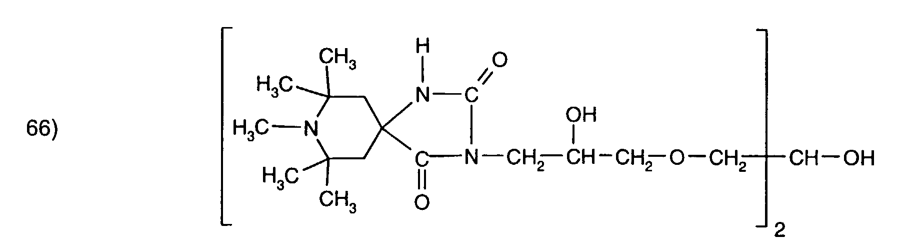

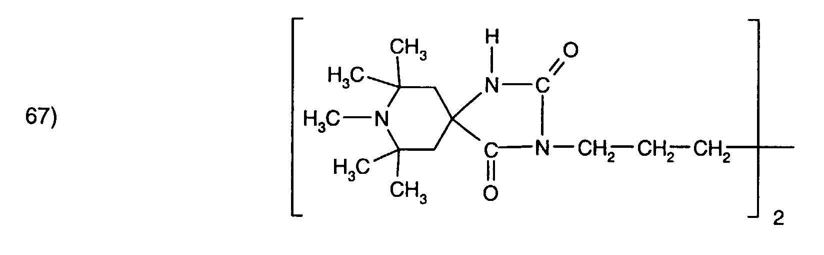

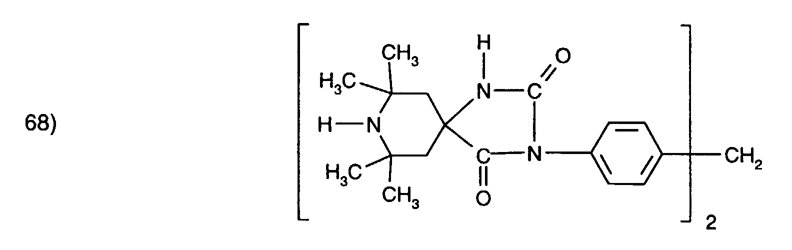

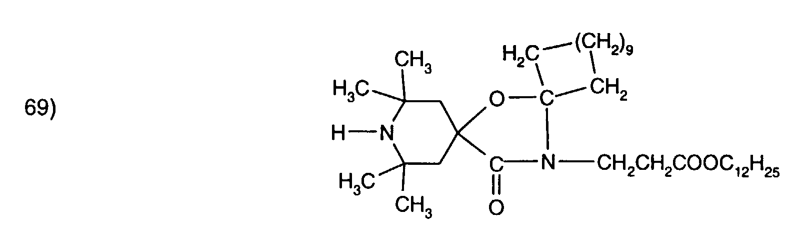

### (e') Verbindungen der Formel IIg, die ihrerseits bevorzugt sind,

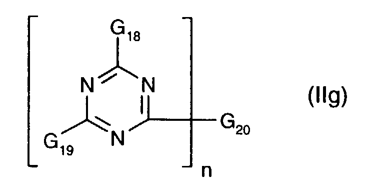

worin n die Zahl 1 oder 2 ist und G₁₈ eine Gruppe einer der Formeln 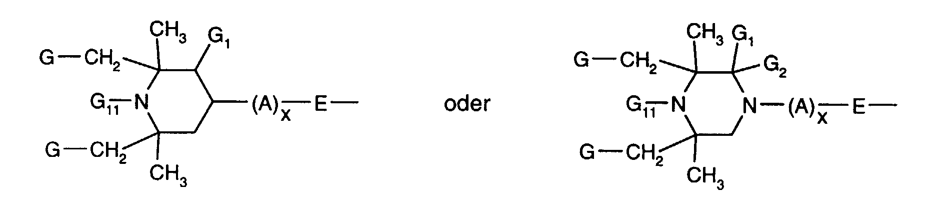 bedeutet, worin G und G₁₁ die unter (a') angegebene Bedeutung haben,
G₁ und G₂ Wasserstoff, Methyl oder gemeinsam einen Substituenten =O bedeuten,
E -O- oder -NG₁₃- ist,
A C₂-C₆-Alkylen oder -(CH₂)₃-O- darstellt,
x die Zahl O oder 1 bedeutet,
G₁₃ Wasserstoff, C₁-C₁₂-Alkyl, C₂-C₅-Hydroxyalkyl oder C₅-C₇-Cycloalkyl darstellt,
G₁₉ gleich G₁₈ oder eine der Gruppen -NG₂₁G₂₂, -OG₂₃, -NHCH₂OG₂₃ oder -N(CH₂OG₂₃)₂ ist,
G₂₀, wenn n = 1 ist, gleich G₁₈ oder G₁₉, und wenn n = 2 ist, G₂₀ eine Gruppe -E-B-E- ist, worin B C₂-C₈-Alkylen oder durch 1 oder 2 Gruppen -N(G₂₁)- unterbrochenes C₂-C₈-Alkylen bedeutet,
G₂₁ C₁-C₁₂-Alkyl, Cyclohexyl, Benzyl oder C₁-C₄-Hydroxyalkyl oder eine Gruppe der Formel 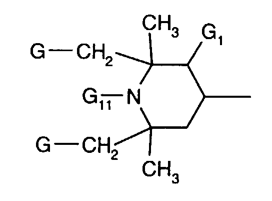 oder eine Gruppe der Formel 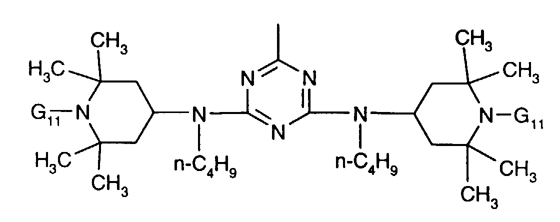 bedeutet,
G₂₂ C₁-C₁₂-Alkyl, Cyclohexyl, Benzyl oder C₁-C₄-Hydroxyalkyl darstellt, oder G₂₁ und G₂₂ zusammen C₄-C₅-Alkylen oder C₄-C₅-Oxaalkylen wie beispielsweise -CH₂CH₂OCH₂CH₂- oder eine Gruppe der Formel -CH₂CH₂N(G₁₁)CH₂CH₂- darstellen, und
G₂₃ Wasserstoff, C₁-C₁₂-Alkyl oder Phenyl bedeutet.

Bedeuten etwaige Substituenten C₁-C₁₂-Alkyl, so stellen sie beispielsweise Methyl, Ethyl, n-Propyl, n-Butyl, sek-Butyl, tert-Butyl, n-Hexyl, n-Octyl, 2-Ethylhexyl, n-Nonyl, n-Decyl, n-Undecyl oder n-Dodecyl dar.

Bedeuten etwaige Substituenten C₂-C₅-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆-Alkylen, so stellt es beispielsweise Ethylen, Propylen, 2,2-Dimethylpropylen, Tetramethylen oder Hexamethylen dar.

Stellen G₂₁ und G₂₂ zusammen C₄-C₅-Alkylen oder Oxaalkylen dar, so bedeutet dies beispielsweise Tetramethylen, Pentamethylen oder 3-Oxapentamethylen.

Beispiele für Polyalkylpiperidin-Verbindungen dieser Klasse sind die Verbindungen der folgenden Formeln: 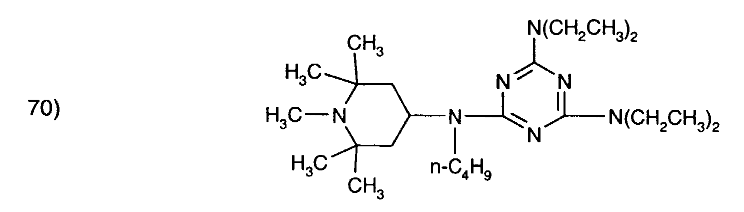 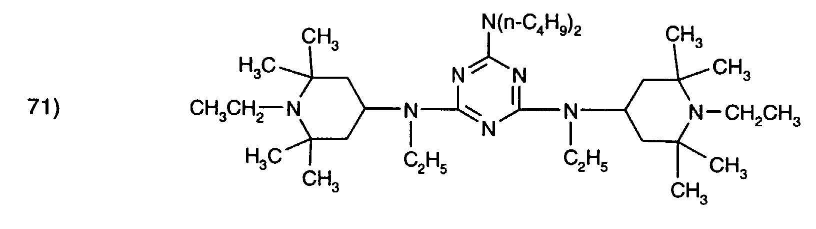 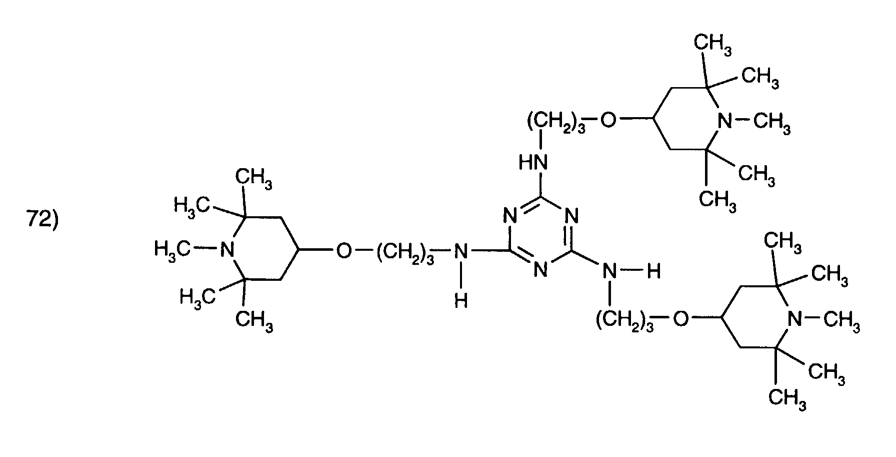 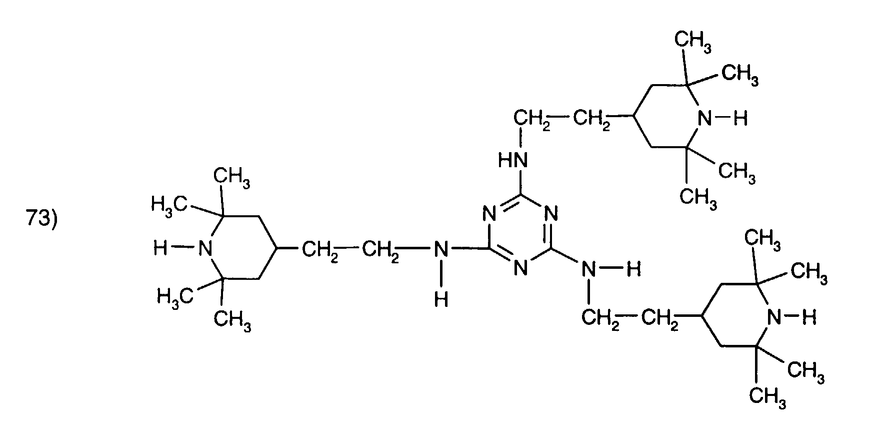 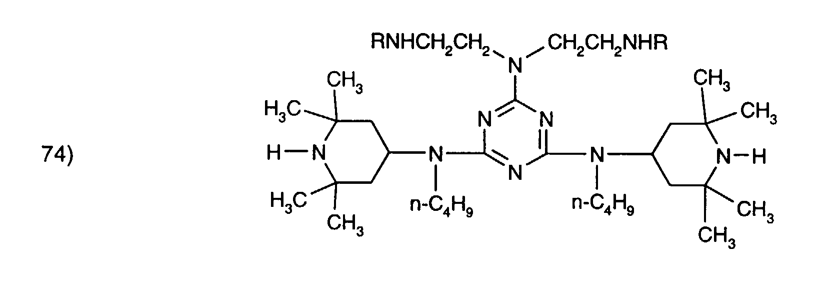 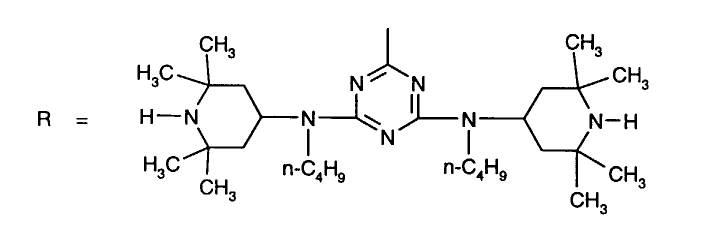 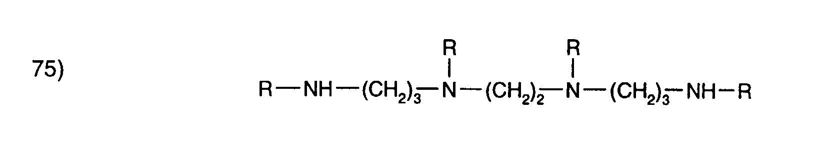 R hat die gleiche Bedeutung wie in Verbindung 74. 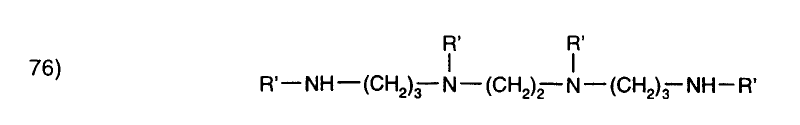 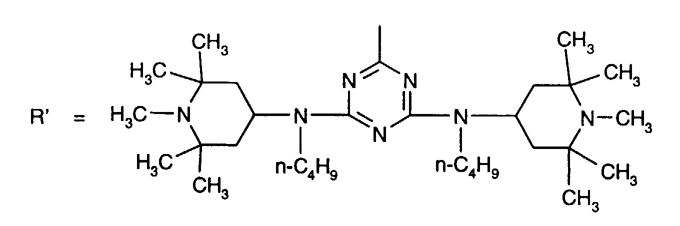 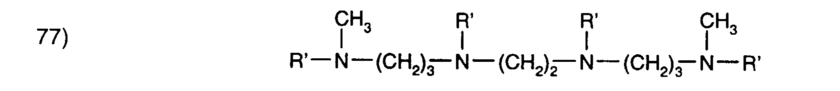 R' hat die gleiche Bedeutung wie in Verbindung 76. 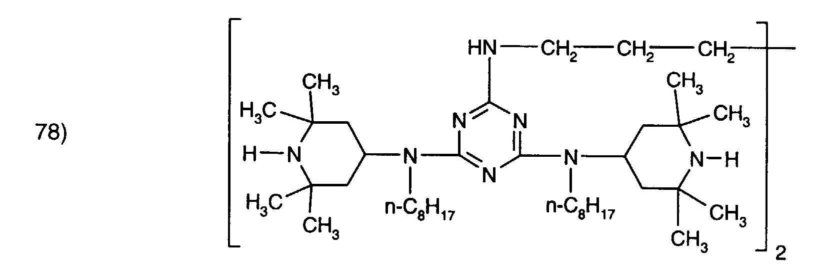 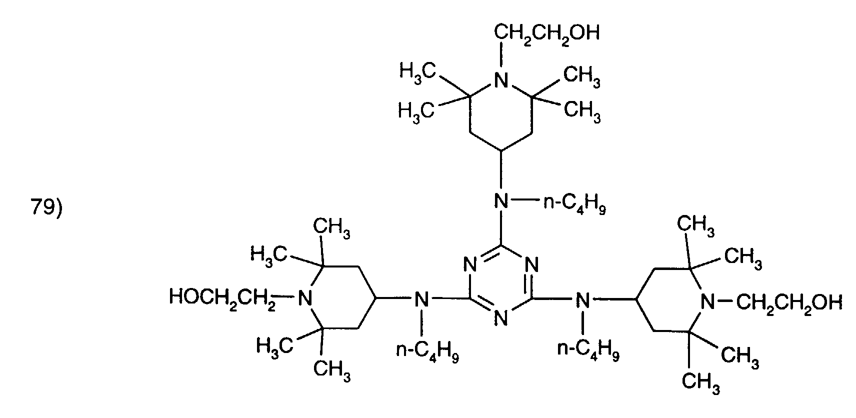 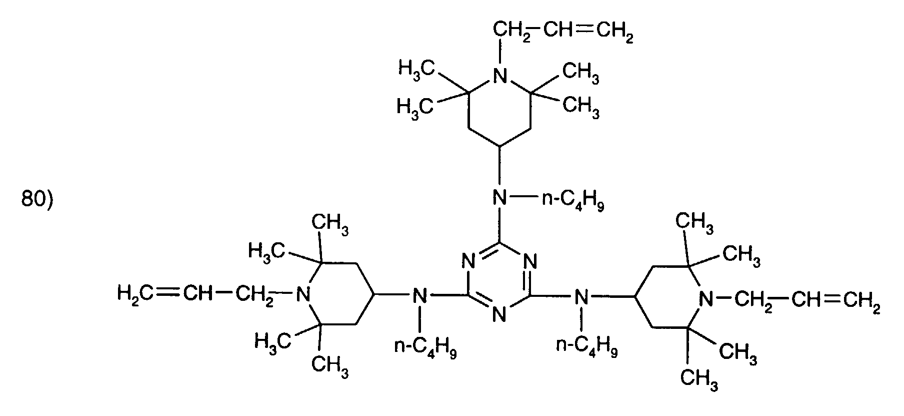 (f') Oligomere oder polymere Verbindungen, deren wiederkehrende Struktureinheit einen 2,2,6,6-Tetraalkylpiperidinrest enthält, insbesondere Polyester, Polyether, Polyamide, Polyamine, Polyurethane, Polyharnstoffe, Polyaminotriazine, Poly(meth)acrylate, Poly(meth)-acrylamide und deren Copolymere, die solche Reste enthalten.

Beispiele für 2,2,6,6-Polyalkylpiperidin-Verbindungen dieser Klasse sind die Verbindungen der folgenden Formeln, wobei m eine Zahl von 2 bis etwa 200 bedeutet. 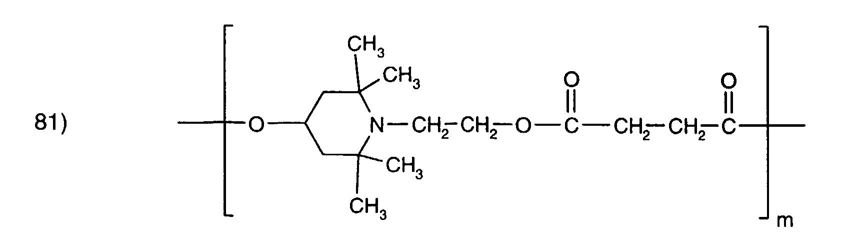 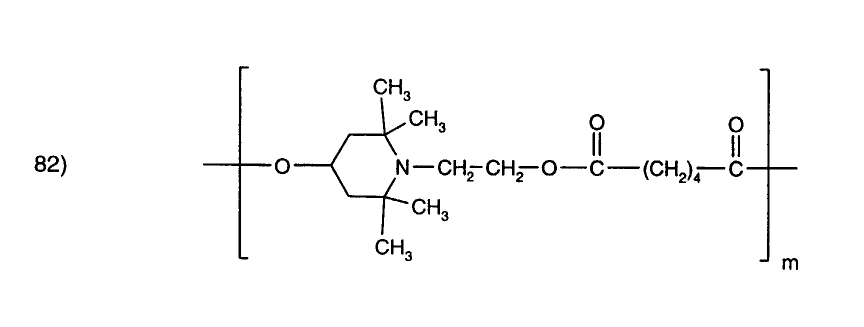 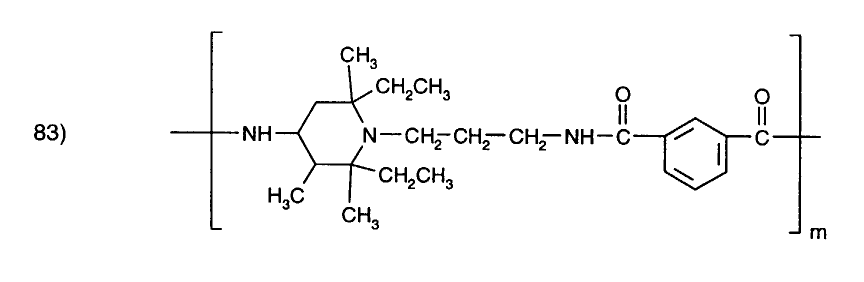 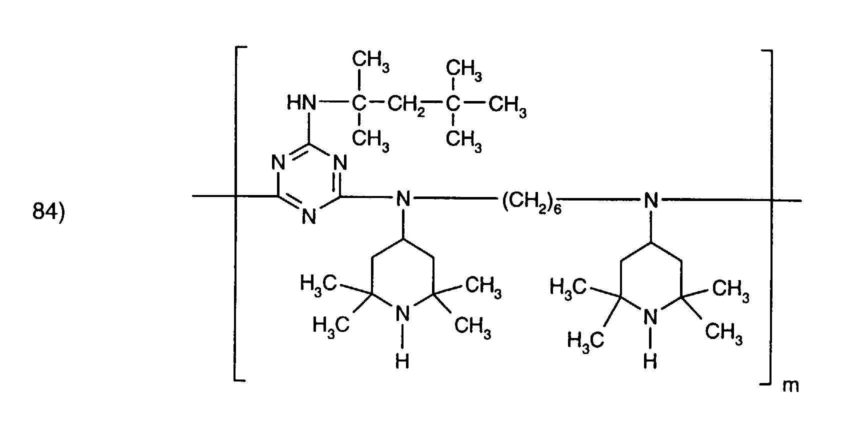 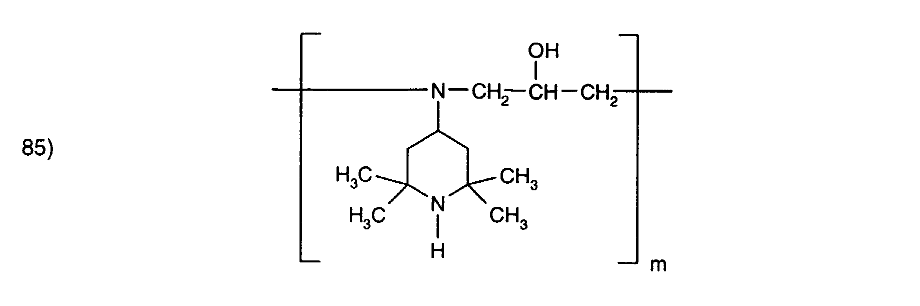 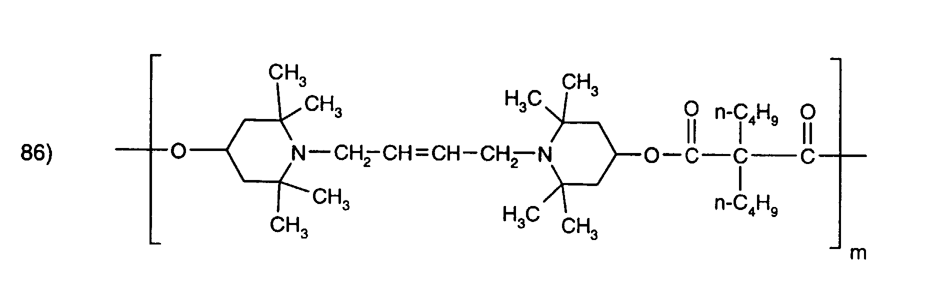 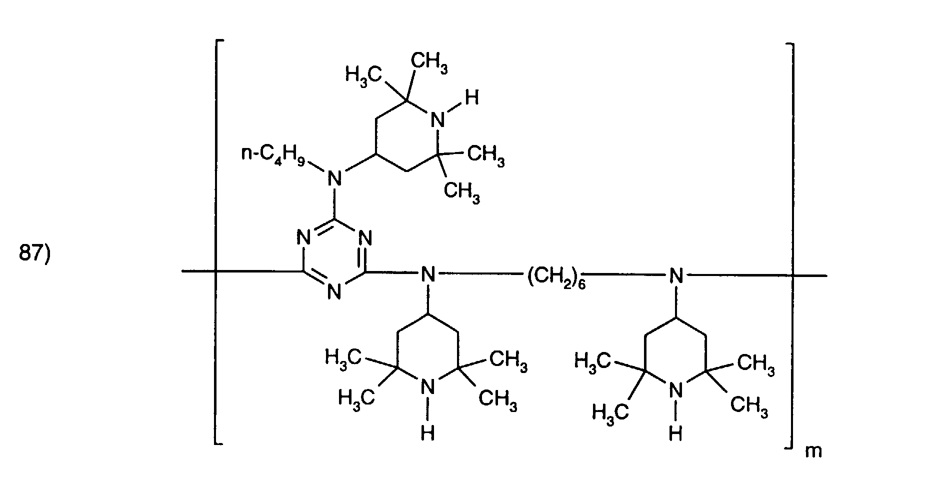 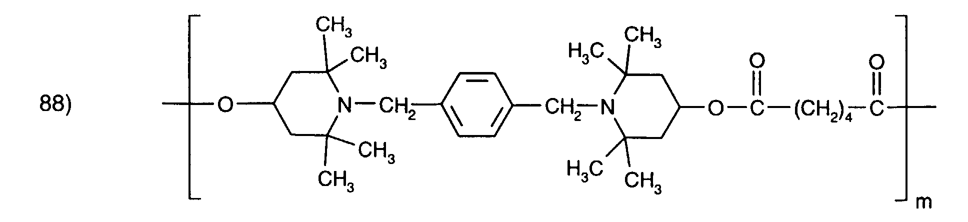 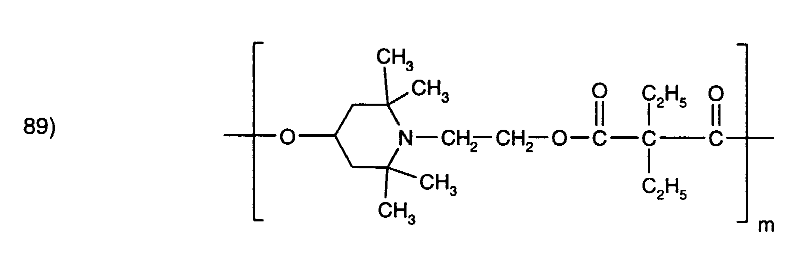 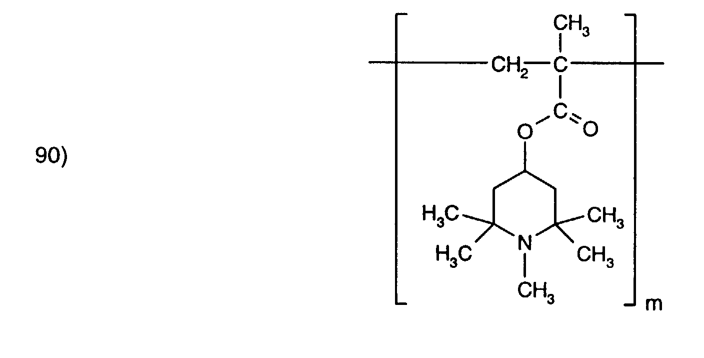 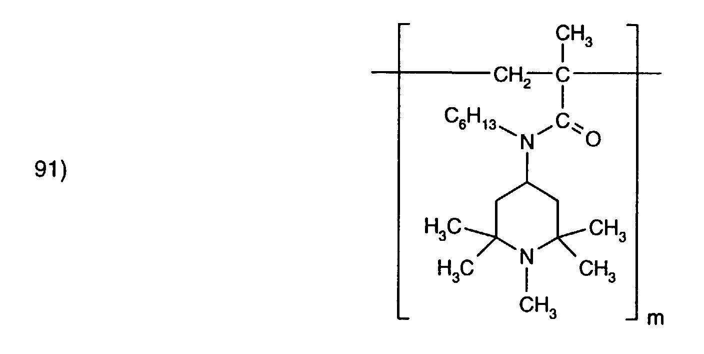 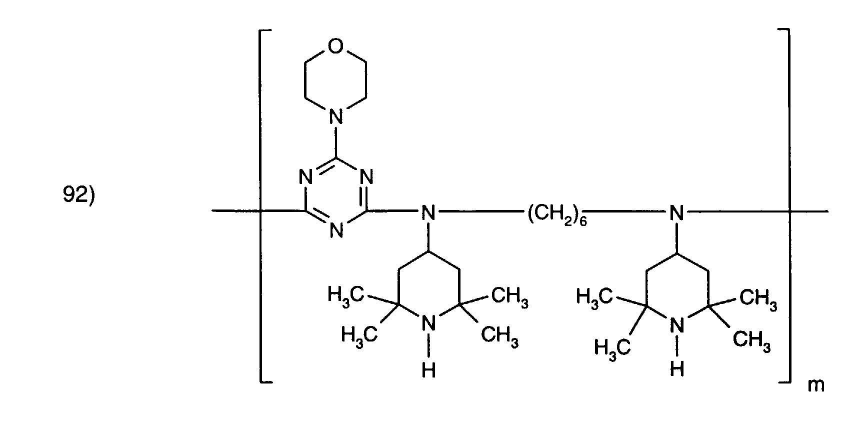 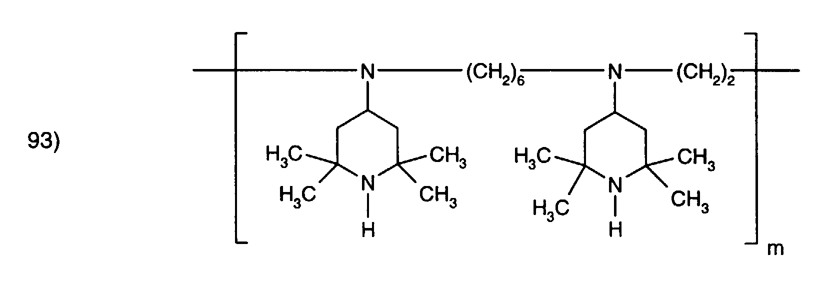 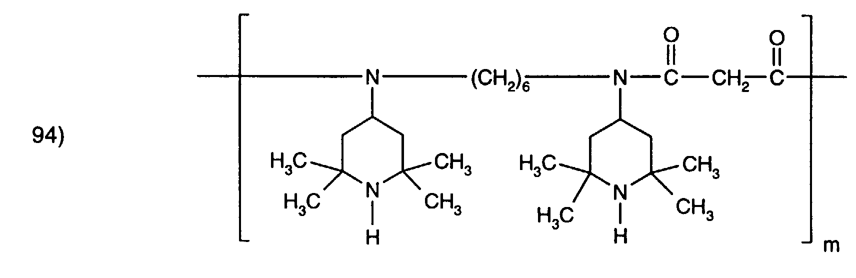 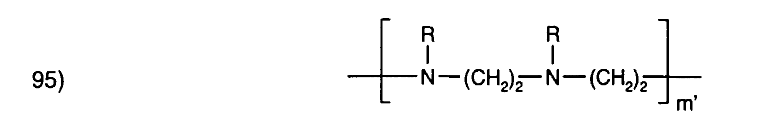 worin R einen Rest der Formel 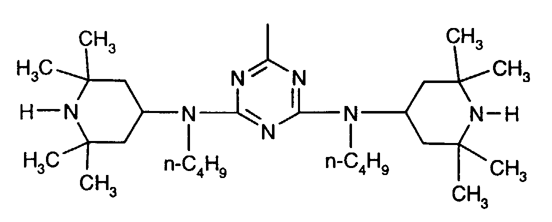 ist oder für eine Verzweigung der Kette 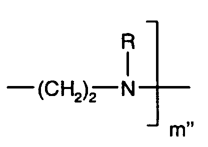 steht, m' und m" jeweils eine ganze Zahl aus dem Bereich von 0 bis 200 bedeuten, mit der Bedingung, dass m' + m" = m.

Weitere Beispiele für polymere Verbindungen sind Umsetzungsprodukte von Verbindungen der Formel 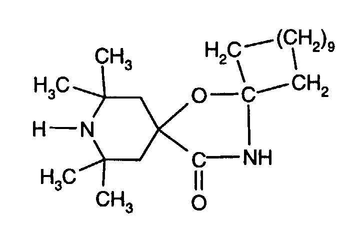 mit Epichlorhydrin; Polyester aus Butan-1,2,3,4-tetracarbonsäure mit einem bifunktionellen Alkohol der Formel 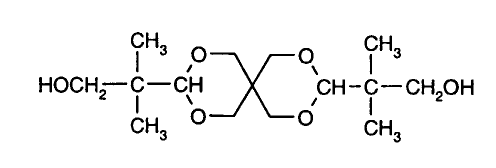 dessen von der Tetracarbonsäure stammenden Carboxyl-Seitenketten mit 2,2,6,6-Tetramethyl-4-hydroxy-piperidin verestert sind; Verbindungen der Formel 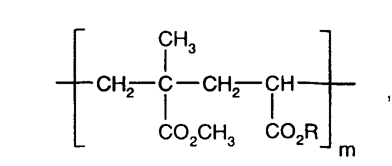 wobei ca. ein Drittel der Reste R die Bedeutung -C₂H₅ haben und die anderen 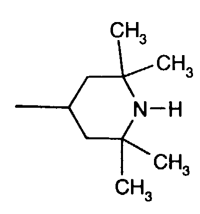 bedeuten, und m eine Zahl aus dem Bereich von 2 bis 200 ist; oder Copolymerisate, deren wiederkehrende Einheit aus zwei Einheiten 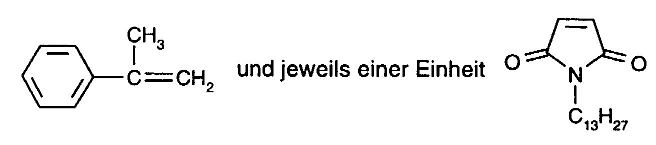 und einer Einheit 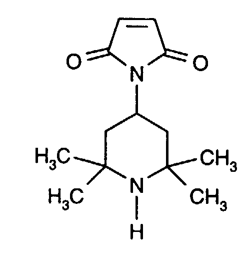 aufgebaut ist.

### (g') Verbindungen der Formel IIIa

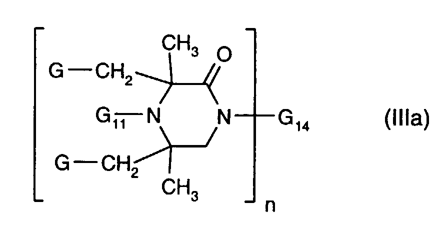

worin n die Zahl 1 oder 2 bedeutet und worin G und G₁₁ die unter (a'), und G₁₄ die unter (b') angegebenen Bedeutungen haben, wobei für G14 die Bedeutungen -CONH-Z und -CH₂-CH(OH)-CH₂-O-D-O- ausgeschlossen sind.

Beispiele für solche Verbindungen sind: 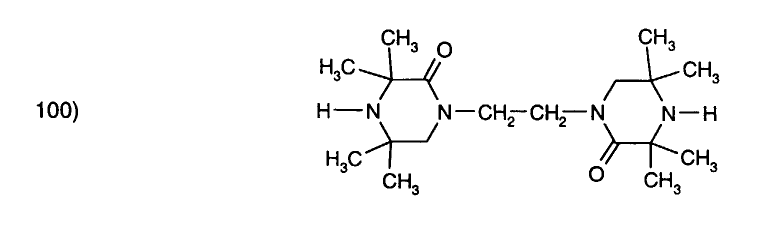 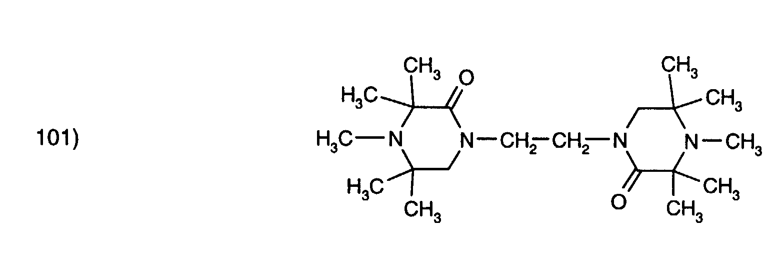 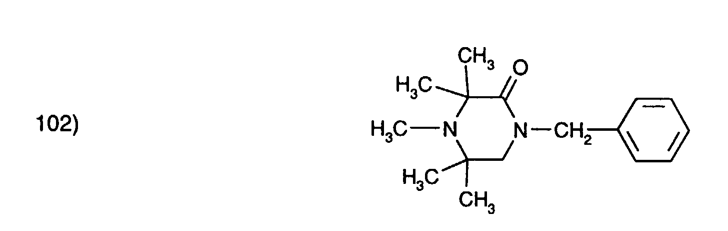 Von besonderem Interesse sind Pulverlackzusammensetzungen enthaltend als Komponente (b)(ii) mindestens eine Verbindung der Formel iiA, iiB, iiC, iiD, iiE, iiF, iiG, iiH oder iiK 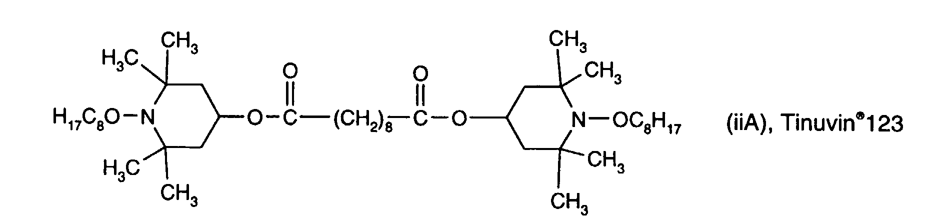 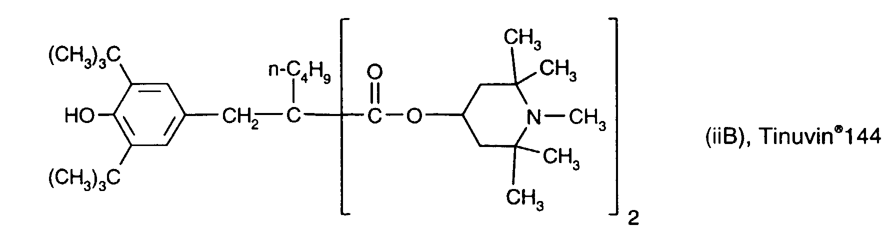 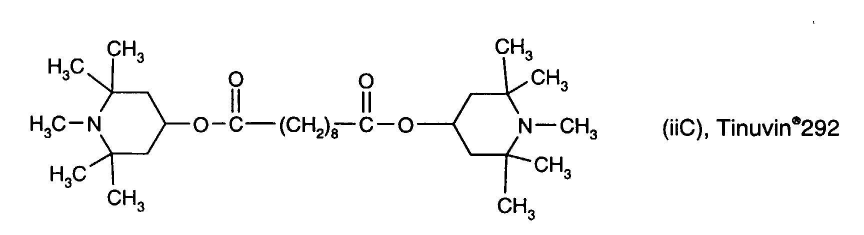 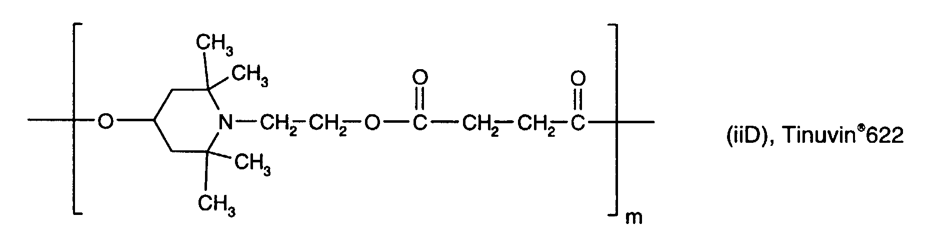 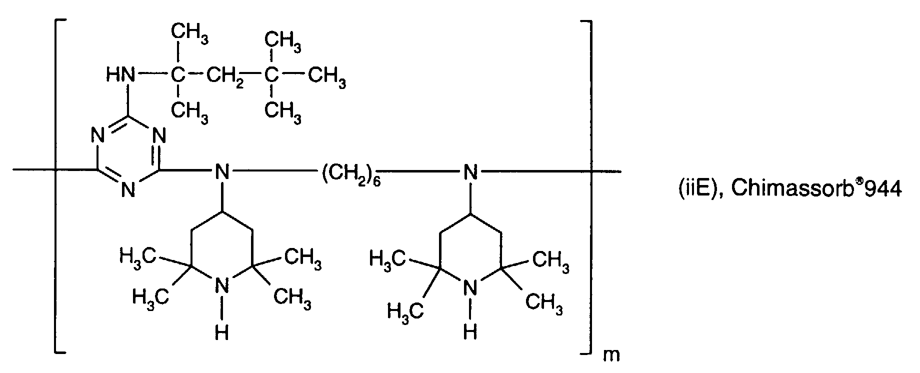 worin m eine Zahl aus dem Bereich von 2 bis 200 darstellt, 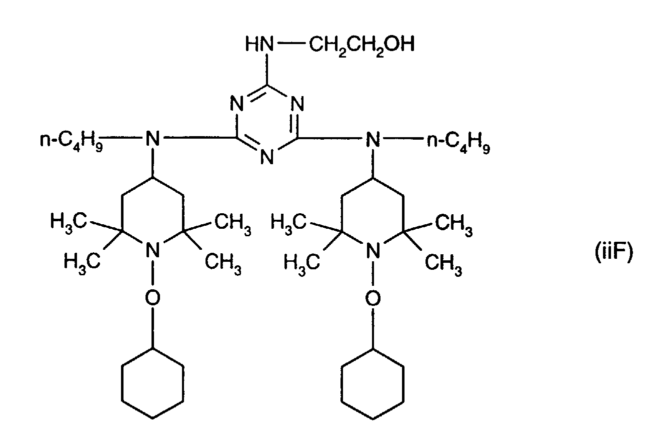 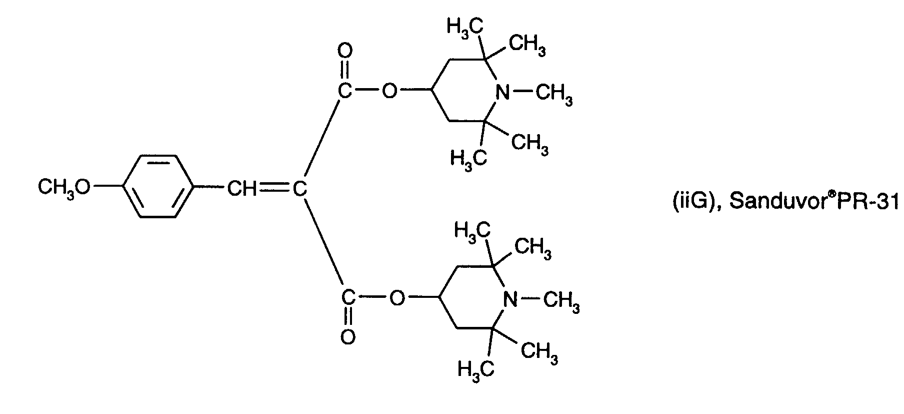 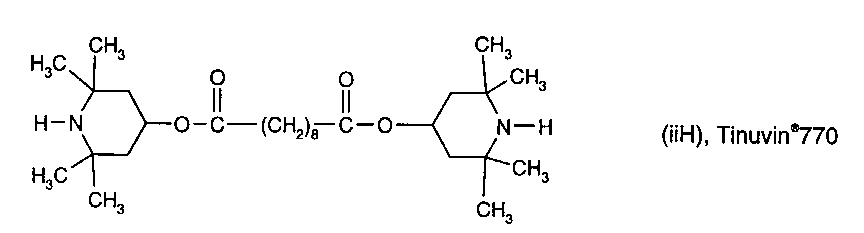 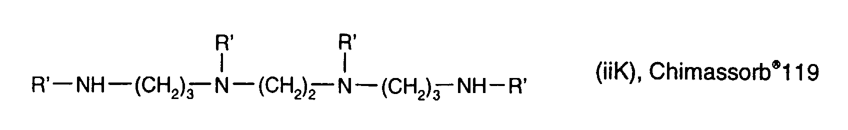 worin 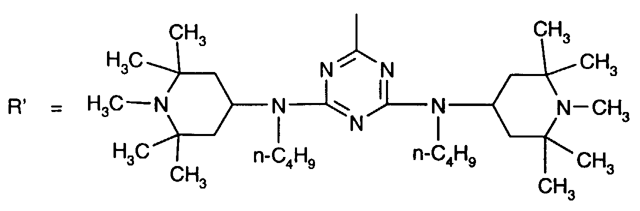 darstellt.

Tinuvin® 123, Tinuvin®144, Tinuvin®292, Tinuvin®622, Tinuvin®770, Chimassorb®944 und Chimassorb®119 sind geschützte Handelsnamen der Firma Ciba Spezialitätenchemie AG. Sanduvor®PR-31 ist ein geschützter Handelsname der Firma Clariant.

Von besonderem Interesse sind Pulverlackzusammensetzungen enthaltend als Komponente (b)(iii) mindestens eine Verbindung aus der Gruppe der organischen Phosphite oder Phosphonite der Formeln 1 bis 7 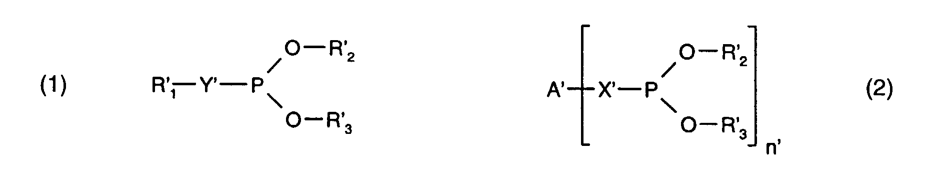 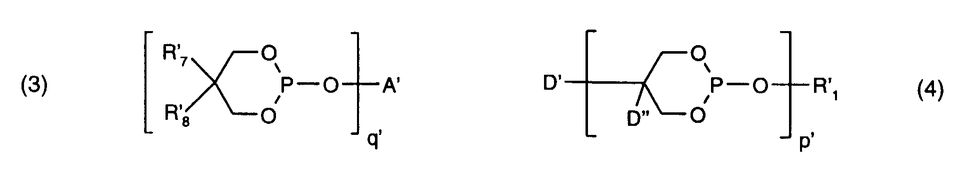 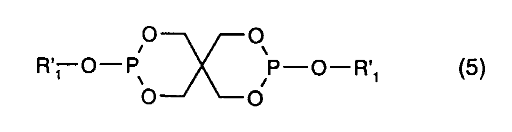 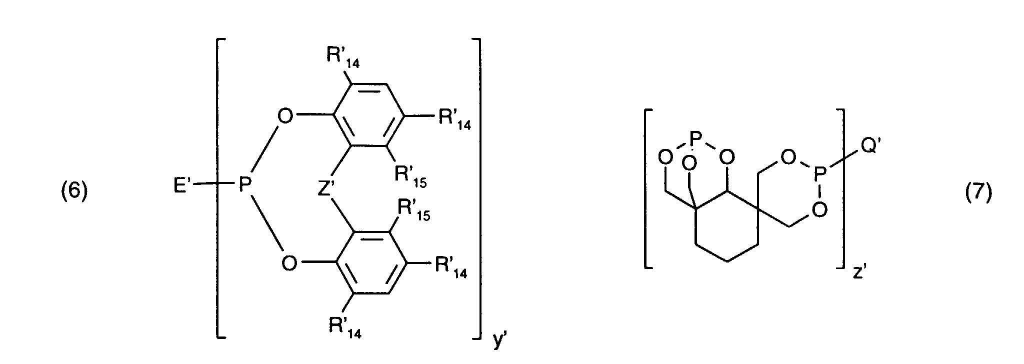 worin die Indices ganzzahlig sind und
n' für 2, 3 oder 4; p' für 1 oder 2; q' für 2 oder 3; r' für 4 bis 12; y' für 1, 2 oder 3; und z' für 1 bis 6 steht;
A', wenn n'2 ist, C₂-C₁₈-Alkylen; durch Sauerstoff, Schwefel oder -NR'₄- unterbrochenes C2-C12-Alkylen; einen Rest der Formel 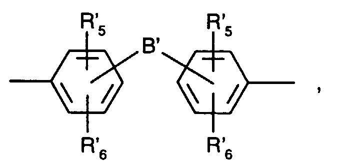 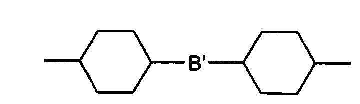 oder Phenylen ist;
A', wenn n' 3 ist, einen Rest der Formel -C_{r'}H_{2r'-1}- bedeutet;
A', wenn n' 4 ist, 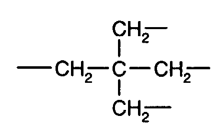 darstellt;
A" die Bedeutung von A', wenn n' 2 ist, hat;
B' eine direkte Bindung, -CH₂-, -CHR'₄-, -CR'₁R'₄-, Schwefel, C₅-C₇-Cycloalkyliden oder mit 1 bis 4 C₁-C₄-Alkylresten in Position 3, 4 und/oder 5 substituiertes Cyclohexyliden bedeutet;
D', wenn p' 1 ist, C₁-C₄-Alkyl und, wenn p'2 ist, -CH₂OCH₂- bedeutet;
D", wenn p' 1 ist, C₁-C₄-Alkyl darstellt;
E', wenn y' 1 ist, C₁-C₁₈-Alkyl, -OR'₁ oder Halogen ist;
E', wenn y 2 ist, -O-A"-O- darstellt,
E', wenn y 3 ist, einen Rest der Formel R'₄C(CH₂₀-)₃ oder N(CH₂CH₂₀-)₃ bedeutet;
Q' für den Rest eines mindestens z'-wertigen Alkohols oder Phenols steht, wobei dieser Rest über das Sauerstoffatom an das Phosphoratom gebunden ist;
R'₁, R'₂ und R'₃ unabhängig voneinander unsubstituiertes oder mit Halogen, -COOR'₄, -CN oder -CONR'₄R'₄ substituiertes C₁-C₁₈-Alkyl; durch Sauerstoff, Schwefel oder -NR'₄- unterbrochenes C₂-C₁₈-Alkyl; C₇-C₉-Phenylalkyl; C₅-C₁₂-Cycloalkyl, Phenyl oder Naphthyl; mit Halogen, 1 bis 3 Alkylresten oder Alkoxyresten mit insgesamt 1 bis 18 Kohlenstoffatomen oder mit C₇-C₉-Phenylalkyl substituiertes Phenyl oder Naphthyl; oder einen Rest der Formel 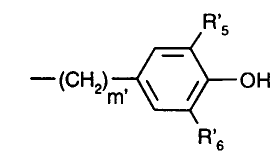 bedeuten, worin m' eine ganze Zahl aus dem Bereich 3 bis 6 bedeutet;
R'₄ Wasserstoff, C₁-C₁₈-Alkyl, C₅-C₁₂-Cycloalkyl oder C₇-C₉-Phenylalkyl darstellt,
R'₅ und R'₆ unabhängig voneinander Wasserstoff, C₁-C₈-Alkyl oder C₅-C₆-Cycloalkyl bedeuten,
R'₇ und R'₈, wenn q' 2 ist, unabhängig voneinander C₁-C₄-Alkyl oder zusammen einen 2,3-Dehydro-pentamethylenrest darstellen; und
R'₇ und R'₈, wenn q' 3 ist, Methyl bedeuten;
R'₁₄ Wasserstoff, C₁-C₉-Alkyl oder Cyclohexyl darstellt,
R'₁₅ Wasserstoff oder Methyl ist, und im Fall, wenn mehrere Reste R'₁₄ und R'₁₅ vorhanden sind, diese Reste gleich oder verschieden sind,
X' und Y' jeweils eine direkte Bindung oder Sauerstoff darstellen,
Z' eine direkte Bindung, Methylen, -C(R'₁₆)₂- oder Schwefel bedeutet, und
R'₁₆ C₁-C₈-Alkyl darstellt.

Von besonderem Interesse sind Pulverlackzusammensetzungen enthaltend als Komponente (b)(iii) ein Phosphit oder Phosphonit der Formel 1, 2, 5 oder 6 ist, worin
n' für die Zahl 2 und y' für die Zahl 1, 2 oder 3 steht;
A' C₂-C₁₈-Alkylen, p-Phenylen oder p-Biphenylen bedeutet,
E', wenn y' 1 ist, C₁-C₁₈-Alkyl, -OR'₁ oder Fluor darstellt;
E', wenn y'2 ist, p-Biphenylen bedeutet,
E', wenn y' 3 ist, N(CH₂CH₂₀-)₃ darstellt,
R'₁, R'₂ und R'₃ unabhängig voneinander C₁-C₁₈-Alkyl, C₇-C₉-Phenylalkyl, Cyclohexyl, Phenyl, mit 1 bis 3 Alkylresten mit insgesamt 1 bis 18 Kohlenstoffatomen substituiertes Phenyl bedeuten;
R'₁₄ Wasserstoff oder C₁-C₉-Alkyl darstellt,
R'₁₅ Wasserstoff oder Methyl ist;
X' eine direkte Bindung bedeutet,
Y' Sauerstoff darstellt,
Z' eine direkte Bindung oder -CH(R'16)- bedeutet, und
R'₁₆ C₁-C₄-Alkyl darstellt.

Ebenfalls von Interesse sind Pulverlackzusammensetzungen enthaltend als Komponente (b)(iii) ein Phosphit oder Phosphonit der Formel 1, 2, 5 oder 6, worin
n' für die Zahl 2 und y' für die Zahl 1 oder 3 steht;
A' p-Biphenylen bedeutet,
E', wenn y' 1 ist, C₁-C₁₈-Alkoxy oder Fluor darstellt,
E', wenn y' 3 ist, N(CH₂CH₂₀-)₃ bedeutet,
R'₁, R'₂ und R'₃ unabhängig voneinander C₁-C₁₈-Alkyl, mit 2 oder 3 Alkylresten mit insgesamt 2 bis 12 Kohlenstoffatomen substituiertes Phenyl darstellen;
R'₁₄ Methyl oder tert-Butyl bedeutet;
R'₁₅ Wasserstoff ist;
X' eine direkte Bindung darstellt;
Y' Sauerstoff bedeutet; und
Z' eine direkte Bindung, Methylen oder -CH(CH₃)- darstellt.

Besonders bevorzugt sind Pulverlackzusammensetzungen enthaltend als Komponente (b)(iii) ein Phosphit oder Phosphonit der Formel 1, 2 oder 6.

Speziell bevorzugt sind Pulverlackzusammensetzungen enthaltend als Komponente (b)(iii) mindestens eine Verbindung der Formel IV 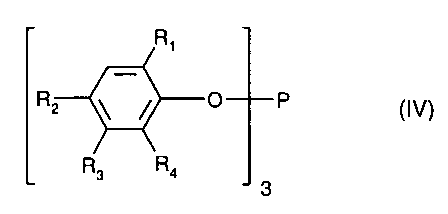 worin
R₁ und R₂ unabhängig voneinander Wasserstoff, C₁-C₈-Alkyl, Cyclohexyl oder Phenyl bedeuten, und
R₃ und R₄ unabhängig voneinander Wasserstoff oder C₁-C₄-Alkyl darstellen.

Von besonderem Interesse sind auch Pulverlackzusammensetzungen worin die Komponente (b)(iii) eine Verbindung der Formel I [Komponente (b)(i)] darstellt.

Die folgenden Verbindungen sind Beispiele für Phosphite und Phosphonite, die sich als Komponente (b)(iii) in den erfindungsgemässen Pulverlackzusammensetzungen sich besonders eignen.

Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit (Irgafos® 168, Ciba Spezialitätenchemie), Diisodecylpentaerythritdiphosphit, Bis(2,4-di-tert-butylphenyl)-pentaerythritdiphosphit (Formel D), Bis-(2,6-di-tert-butyl-4-methylphenyl)-pentaerythritdiphosphit (Formel E), Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit (Irgafos® PEP-Q, Ciba Spezialitätenchemie, Formel H), 6-Isooctyloxy-2,4,8,10-tetra-tert-butyl-12H-dibenz[d,g]-1,3,2-dioxaphosphocin (Formel C), 6-Fluor-2,4,8,10-tetra-tert-butyl-12-methyl-dibenz[d,g]-1,3,2-dioxaphosphocin (Formel A), Bis-(2,4-di-tert-butyl-6-methylphenyl)-methylphosphit, Bis(2,4-di-tert-butyl-6-methylphenyl)-ethylphosphit (Formel G), Ultranox®641 [GE Chemicals, Formel (1)], Doverphos®S9228 [Dover Chemicals, Formel (K)] oder Mark®HP10 [Adeka Argus, Formel (L)].

Besonders bevorzugt werden die folgenden Phosphite verwendet:
Tris(2,4-di-tert-butylphenyl)-phosphit (Irgafos®168, Ciba Spezialitätenchemie), Tris(nonylphenyl)-phosphit,

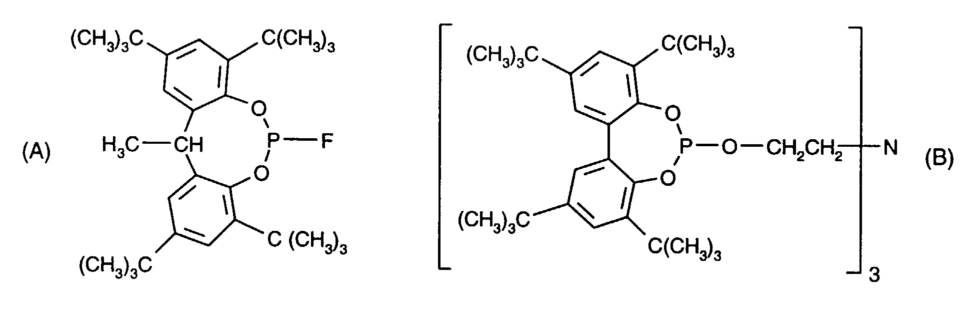

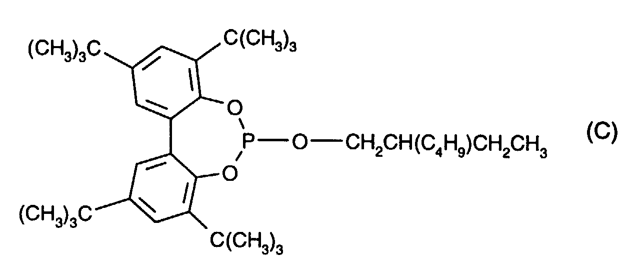

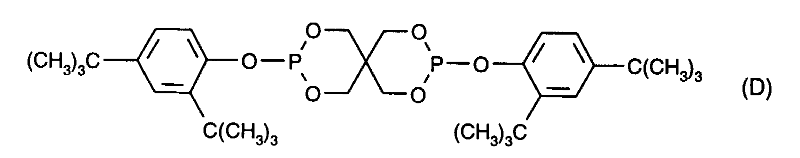

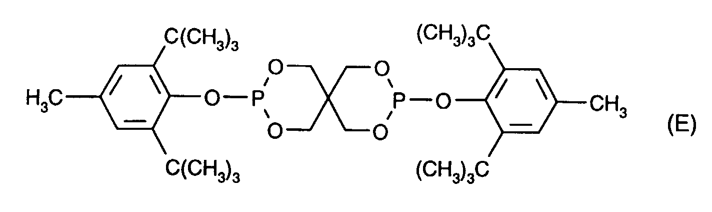

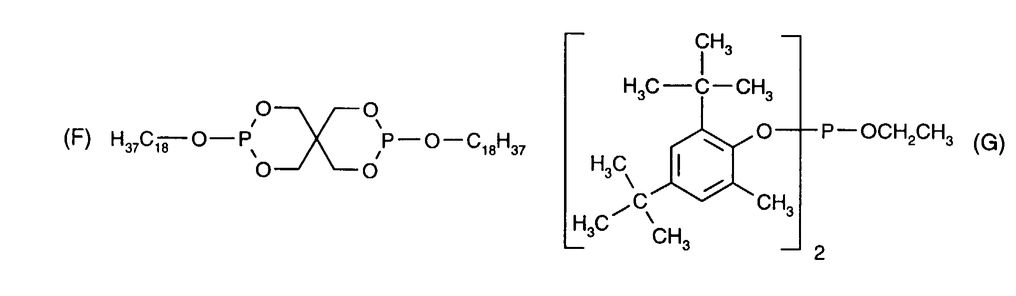

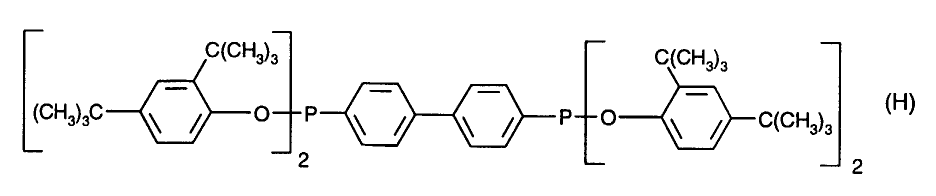

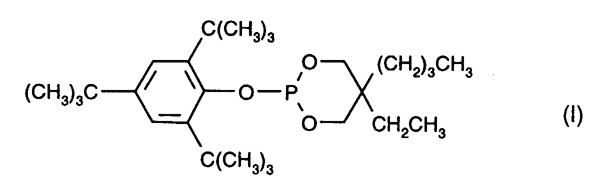

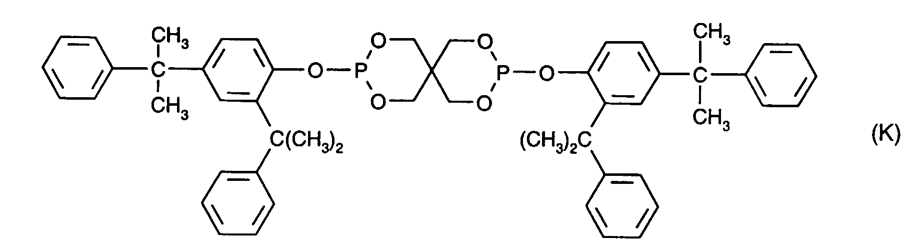

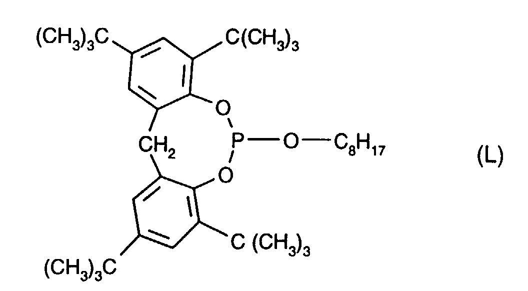

Ganz besonders bevorzugt wird Tris(2,4-di-tert-butylphenyl)-phosphit [Irgafos®168, Ciba Spezialitätenchemie], Bis(2,4-di-tert-butyl-6-methylphenyl)-ethyl-phosphit [Irgafos®38, Ciba Spezialitätenchemie, Formel (G)], Ultranox®626 [GE Chemicals, Formel (D)], Tetrakis(2,4-di-tert-butylphenyl)-4,4'-biphenylen-diphosphonit [Irgafos®PEP-Q, Ciba Spezialitätenchemie, Formel (H)], Ultranox®641 [GE Chemicals, Formel (1)], Doverphos®S9228 [Dover Chemicals, Formel (K)] oder Mark®HP10 [Adeka Argus, Formel (L)].

Die Verbindung der Formel G (Irgafos®38, Ciba Spezialitätenchemie) ist sowohl für die Komponente (b)(i) als auch für die Komponente (b)(iii) in den erfindungsgemässen Pulverlackzusammensetzungen ein speziell bevorzugtes Phosphit.

Von besonderem Interesse sind Pulverlackzusammensetzungen enthaltend als Komponente (b)(iii) eine Verbindung aus der Gruppe der organischen Phosphite oder Phosphonite mit einem Schmelzpunkt von 40-150°C, insbesondere 60-120°C, z.B. 70-110°C. Diese bevorzugten Schmelzbereiche erleichtern die Mischung der Komponente (b)(i) oder (b)(iii) mit der Komponente (a).

Die genannten sterisch gehinderten Amine sowie die organischen Phosphite und Phosphonite sind bekannte Verbindungen; viele davon sind kommerziell erhältlich.

Die Herstellung der Verbindungen der Formel I [Komponente (b)(i)] ist im U.S. Patent 5,401,845 beschrieben.

Unter dem Begriff "Pulverlackzusammensetzungen" bzw. "Pulverlacke" wird die Definition wie sie in "Ullmann's Encyclopedia of Industrial Chemistry, 5th, Completely Revised Edition, Vol. A 18", Seiten 438 bis 444 (1991) unter dem Kapitel 3.4 beschrieben ist, verstanden. Unter Pulverlacken werden thermoplastische oder einbrennbare, vernetzbare Polymere, die in Pulverform auf vorwiegend metallische Substrate aufgetragen werden, verstanden. Die Art und Weise, wie das Pulver mit dem zu beschichtenden Werkstück in Kontakt gebracht wird, kennzeichnet die verschiedenen Auftragsverfahren, wie beispielsweise elektrostatisches Pulverspritzen, elektrostatisches Wirbelsintern, Schüttsintern, Wirbelsintern, Rotationssintern oder Zentrifugalsintern.

Bevorzugte organische filmbildende Bindemittel für die erfindungsgemässen Pulverlackzusammensetzungen sind Einbrennsysteme auf Basis von beispielsweise Epoxidharzen, Polyester-Hydroxyalkylamiden, Polyester-Glykolurilen, Epoxid-Polyesterharzen, Polyester-Triglycidylisocyanuraten, hydroxyfuntionellen Polyester-blockierten Polyisocyanaten, hydroxyfunktionellen Polyester-Uretdionen, Acrylatharzen mit Härter oder Mischungen solcher Harze. Von Interesse sind auch filmbildende Bindemittel mit thermoplastischen Eigenschaften wie beispielsweise Polyethylen, Polypropylen, Polyamide, Polyvinylchlorid, Polyvinylidendichlorid oder Polyvinylidendifluorid.

Polyester sind in der Regel hydroxy- oder carboxyfunktionell und werden üblicherweise durch Kondensation von Diolen und Dicarbonsäuren hergestellt. Durch Zugabe von Polyolen und/oder Polysäuren werden verzweigte Polyester erhalten, welche beim Einbrennen in Gegenwart von Vernetzern dann Netzwerkstrukturen ergeben, die der Beschichtung die erwünschten physikalischen Eigenschaften wie Kratzfestigkeit, Schlag- und Biegefestigkeit verleihen. Anstelle von multifunktionellen Säuren können auch Anhydride oder Säurechloride wie z.B. Maleinsäureanhydrid, Itakonsäureanhydrid, Phthalsäureanhydrid, Terephthalsäureanhydrid, Hexahydroterephthalsäureanhydrid, Trimellithsäureanhydrid, Pyromellithsäuredianhydrid, Bernsteinsäureanhydrid usw. verwendet werden. Es können auch einfache Ester wie z.B. Dimethylterephthalat verwendet werden, wobei die Polymerisation durch Transesterifizierung unter Abspaltung des flüchtigen Alkohols abläuft. Praktikabel ist ebenfalls eine Herstellung durch eine Kombination von Transesterifizierung und Kondensation. Weiter können Polyester durch Polykondensation von Hydroxycarbonsäuren wie z.B. 12-Hydroxystearinsäure und Hydroxypivalinsäure oder den entsprechenden Lactonen wie z.B. ε-Caprolacton hergestellt werden. Beispiele für Dicarbonsäuren und Polysäuren sind u.a. Terephthalsäure, Isophthalsäure, Adipinsäure, Azelainsäure, Sebazinsäure, 1,12-Dodecandisäure, Pyromellithsäure, 3,6-Dichlorophthalsäure, Bernsteinsäure, 1,3-Cyclohexandicarbonsäure und 1,4-Cyclohexandicarbonsäure. Beispiele für Diole und Polyole sind u.a. Ethylenglykol, Propylenglykol, Glycerin, Hexantriol, Hexan-2,5-diol, Hexan-1,6-diol, Pentaerythritol, Sorbitol, Neopentylglykol, Trimethylolethan, Trimethylolpropan, Tris-1,4-Cyclohexandimethanol, Trimethylpentandiol, 2,2-Diethyl-1,3-propandiol, 2-Methyl-2-butyl-1,3-propandiol, Esterdiol 204 (Ester der Hydroxypivalinsäure und Neopentylglykol), hydriertes Bisphenol A, Bisphenol A, Hydroxypivalinsäure, Hydroxypivalatester, 2-Butyl-2-ethyl-1,3-propandiol, 1,4-Butandiol, 2-Buten-1,4-diol, 2-Butyn-1,4-diol oder 2-Methyl-1,3-propandiol.

Als Vernetzungsmittel für carboxyfunktionelle Polyester sind Epoxyverbindungen wie z.B Novolac®-Epoxyharze, Diglycidyläther von Bisphenol A, hydriertes Bisphenol A und Bisphenol A modifiziert durch Reaktion mit z.B. aliphatischen Dicarbonsäuren geeignet. Ebenso geeignet sind reaktive Epoxyverbindungen wie Triglycidyltriazolidin-3,5-dion, die Glycidylester von Polysäuren wie z.B. Diglycidylterephthalat und Diglycidylhexahydroterephthalat, Hydantoinepoxide (US-A-4 402 983) und ganz besonderes Triglycidylisocyanurat und aliphatische Polyepoxy-Verbindungen wie beispielsweise Araldit® PT910 (Ciba Spezialitätenchemie) sowie epoxidierte mehrfach ungesättigte Fettsäureester wie beispielsweise Uranox® (DSM). Weitere Vernetzungsmittel für carboxyfunktionelle Polyester sind β-Hydroxyalkylamide (siehe US-A-4 076 917), wie z.B. das mehrheitlich tetrafunktionelle β-Hydroxyalkylamid-Derivat der Adipinsäure (Primid® XL552 von Rohm & Haas). Auch haben sich Derivate von Melamin, Benzoguanimin und Glykoluril, welche mit niedrigmolekularen Alkoholen alkyliert sind, bewährt. Beispiele sind Tetramethylmethoxyglykoluril (Powderlink® 1174 von American Cyanamid). Ferner sind auch Bis- und Trisoxazolidine wie z.B. 1,4-Bisoxazolidinobenzol als Vernetzungsmittel bekannt.

Jüngeren Datums sind carboxyfunktionelle Polyester, welche chemisch gebundene Epoxygruppen enthalten und demzufolge mit sich selbst vernetzen können (Molhoek et al., 22er Fatipec Congress, 15.-19.5.95, Budapest, Vol.1, 119-132).

In allen Systemen, in denen eine Epoxygruppe oder ein Glycidylrest mit einer Carboxylgruppe oder einem Anhydrid in einer Vernetzungsreaktion reagiert, können Katalysatoren eingesetzt werden. Beispiele sind Amine oder Metallverbindungen wie z.B. Aluminiumacetylacetonat oder Zinnoctoat.

Als Vernetzungsmittel für hydroxyfunktionelle Polyester sind die Polyisocyanatvernetzer von besonderer Bedeutung. Um aufgrund der hohen Reaktivität von Isocyanaten eine vorzeitige Vernetzung zu verhindern und um einen guten Verlauf des aufgeschmolzenen Pulvers zu erhalten, werden die Polyisocyanate blockiert (intern als ein Uretdion oder als ein Addukt mit einem Blockierungsmittel). Als Blockierungsmittel werden am häufigsten ε-Caprolactam, Methylethylketoxim oder Butanonoxim eingesetzt. Weitere geeignete Blockierungsmittel für Isocyanate sind in den Veröffentlichungen von G.B. Guise, G.N. Freeland und G.C. Smith, J. Applied Polymer Science, 23, 353 (1979) und von M.Bock und H.-U. Maier-Westhues in "Progress in Product Development for Powder Coating Technology, XIX th Int. Conf. on Organic Coatings, Science and Technol., Athens, 12-16 July",1993 beschrieben. Beispiele für gegebenenfalls blockierte Polyisocyanate sind u.a. 2-Methylpentan-1,5-diisocyanat, 2-Ethylbutan-1,4-diisocyanat, 3(4)-lsocyanatomethyl-1-methylcyclohexylisocyanat, 3-lsocyanatomethyl-3,5,5-trimethylcyclohexandiisocyanat, Tris(isocyanatomethyl)benzol, 4,4'-Diisocyanatodicyclohexylmethan, 1,4-Bis(isocyanatomethyl)cyclohexan, m-Tetramethylxyloldiisocyanat, p-Tetramethylxyloldiisocyanat und besonders Isophorondiisocyanat. Zur Reaktion des deblockierten Diisocyanats wird meistens ein metallischer Katalysator, wie z.B. Zinnoctoat, Dibutylzinnoxyd oder Dibutylzinndilaurat zu der Polyisocyanat-Formulierung gegeben.

Als weitere Vernetzungsmittel für hydroxyfunktionelle Polyester sind Anhydride wie z.B. Trimellithsäureanhydrid und seine Reaktionsprodukte mit Diolen und Diaminen geeignet. Weitere Beispiele solcher Vernetzungsmittel sind von T.A. Misev in "Powder Coatings: Chemistry and Technology", Verlag J.Wiley & Sons, Chichester auf Seiten 123 u. 124 beschrieben.

Polyacrylate, die gewöhnlich Hydroxy-,Carboxy- oder Glycidylfunktionalität aufweisen, werden auch als Bindemittel für Pulverlacke eingesetzt. Diese werden nach den üblichen Methoden hauptsächlich aus Monomeren wie z.B. Styrol und linearen oder verzweigten C₁-C₈-Alkylestern von Acrylsäure oder Methacrylsäure hergestellt. Auch andere ethylenisch ungesättigte Verbindungen wie z.B. Divinylbenzol., Acrylamid, Methacrylamid, Butoxymethylacrylamid, Acrylonitril, Butadien usw. können zugegeben und copolymerisiert werden. Hydroxyfunktionalität wird durch die Copolymerisation von hydroxyfunktionellen Monomeren wie z.B. Hydroxyethylacrylat, Hydroxyethylmethacrylat, Hydroxypropylacrylat, Hydroxypropylmethacrylat gewährleistet. Für Carboxyfunktionalität werden ethylenisch ungesättigte Säuren und Anhydride wie z.B. Acrylsäure, Methacrylsäure, Itakonsäure, Crotonsäure, Maleinsäureanhydrid, Itakonsäureanhydrid, Acrylsäureanhydrid oder Methacrylsäureanhydrid verwendet (US-A-3 836 604). Glycidylfunktionalität wird wie in EP-A-0 256 369 und US-A-3 876 578 gelehrt, durch die Copolymerisation von Monomeren wie Glycidylacrylat und Glycidylmethacrylat gegeben. Als Vernetzungsmittel für Polyacrylate mit Hydroxy- oder Carboxyfunktionalität können im Prinzip die gleichen Verbindungen, wie bereits für die Polyester mit Hydroxy- oder Carboxyfunktionalität beschrieben, verwendet werden. Weitere geeignete Vernetzungsmittel sind die Epoxyverbindungen des US-A-0 045 040. Geignete Vernetzungsmittel für Polyacrylate mit Glycidylfunktionalität sind Dicarbonsäuren wie z.B. Sebazinsäure, 1,12-Dodecandicarbonsäure und Anhydride wie beispielsweise Bis-trimellithsäureanhydrid und die in US-A-3 880 946 beschriebenen Verbindungen. Ferner sind auch selbstvernetzende Polyacrylate aus DE-A-3 310 545 bekannt.

Epoxidharze für Pulverlacke sind meistens entweder Novolac®-Epoxidharze oder besonders solche auf Basis aromatischer Polyole, insbesondere auf Basis von Bisphenolen wie Bisphenol A. Ferner sind modifizierte Bisphenolepoxidharze aus JP-A-58 187 464 (1982) bekannt. Die Epoxidharze werden in Kombination mit Vernetzern aus den Klassen der festen aliphatischen Amine, festen aromatischen Amine, Aminaddukte, Phenolharze, Polysäuren und den bereits beschriebenen carboxyfunktionellen Polyestern angewandt. Ganz besonders als Härter zu erwähnen sind die Dicyandiamide, die häufig mit einem Katalysator wie beispielsweise Lewissäuren, Borontrifluorid-Amin-Komplexen, Metallkomplexen, tertiären oder quaternären Aminen und Imidazolin Derivaten wie 2-Methylimidazolin eingesetzt werden.

In den erfindungsgemässen Pulverlackzusammensetzungen wird das Harz und das Vernetzungsmittel zweckmässig in ungefähr stöchiometrischen Mengen eingesetzt. Abweichungen von den stöchiometrischen Mengen von mehr als 30 % führen meistens zu einer Abnahme der gewünschten physikalischen Eigenschaften der gehärteten Lackschicht, wie beispielsweise Flexibilität, Schlagfestigkeit, Haftung, Bewitterungsbeständigkeit oder Lösungsmittelbeständigkeit.

Zusätzlich zu den Komponenten (a) und (b) können die erfindungsgemässen Pulverlackzusammensetzungen noch weitere Additive enthalten.

Bevorzugte erfindungsgemässe Pulverlackzusammensetzungen enthalten als weitere Additive eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren oder Photoinitiatoren. Die erfindungsgemässen Pulverlackzusammensetzungen können auch noch Korrosionsschutzmittel enthalten, beispielsweise Korrosionsschutz-Pigmente, wie phosphat- oder borathaltige Pigmente oder Metalloxid-Pigmente, oder andere organische oder anorganische Korrosionsinhibitoren, z.B. Salze der Nitroisophthalsäure, Phosphorester, technische Amine oder substituierte Benztriazole.

Geeignete Photoinitiatoren für Pulverlackzusammensetzungen, die beispielsweise mit UV-Licht gehärtet werden, sind solche auf Basis von Benzophenonen, Phenylglyoxalaten, Bis- bzw. Mono-acylphosphinoxiden, α-Hydroxyketonen oder Benzil-dimethyl-ketalen. Als Lichtquellen werden zweckmässig Mitterdruck- oder Hochdruck- Quecksilberlampen eingesetzt.

Beispiele für Entgasungsmittel sind Fettsäureamide wie in EP-A-0 471 409 beschrieben, ε-Caprolactam, Methyl- und Dimethylisophthalat (EP-A-284 996) und ganz besonders Benzoin.

Beispiele für Verlaufshilfsmittel sind epoxidierte Fettsäuren, Abietylalkohol, Polylaurylmethacrylat, Polylaurylacrylat, Polydimethylsiloxan-polyalkylenoxid Blockcopolymere oder insbesondere Polymere und Copolymere mit niedrigem Molekulargewicht von C₁-C₈-Alkylacrylatestern oder Alkylmethacrylatestern.

Haftungsverbesserer basieren z.B. auf modifizierten Silanen, Titanaten oder Zirkonaten.

Ein optischer Aufheller ist beispielsweise Uvitex®OB (Ciba Spezialitätenchemie).

Die Pigmente sind beispielsweise Titandioxid, Eisenoxid, Russ, Aluminiumbronze, Phthalocyaninblau oder Aminoanthrachinon.

Beispiele für Füllstoffe sind Talk, Aluminiumoxid, Aluminiumsilikat, Aluminiumphosphat, Baryt, Glimmer, Siliciumdioxid, Calcium- oder Magnesiumcarbonat, Magnesiumoxid, Zinkoxid, Zinkcarbonat, Zinkphosphat oder Gemische davon.

Besonders bevorzugte erfindungsgemässe Pulverlackzusammensetzungen enthalten als weitere Additive Antioxidantien, insbesondere phenolische Antioxidantien, wie beispielsweise die folgenden:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
1.7. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
1.8. Hydroxybenzyl-Aromaten, z.B. 1 ,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
1.9. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1 ,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1 ,3,5-Tris(3,5-di-tert-butyl-4-hydroxyphenylpropionyl)-hexahydro-1,3,5-triazin, 1 ,3,5-Tris(3,5-dicyclohexyl-4-hydroxybenzyl)-isocyanurat.
1.10. Benzylphosphonate, z.B. Dimethyl-2,5-di-tert-butyl-4-hydroxybenzylphosphonat, Di-ethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.12. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.13. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(3.5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.

Die phenolischen Antioxidantien werden beispielsweise in Konzentrationen von 0,01 bis 10 %, bezogen auf das Gesamtgewicht der Pulverlackzusammensetzung, zugesetzt.

Bei der Herstellung des organischen filmbildenden Bindemittels [Komponente (a)] durch Polymerisation oder Polykondensation von Monomeren können die Komponenten (b)(i), (b)(ii) und (b)(iii) den Monomeren vor der Polymerisation bereits zugemischt werden.

Die Komponenten (b)(i), (b)(ii) und (b)(iii) werden zweckmässig in einer Menge von 0,001 bis 10 Gew.-%, beispielsweise 0,01 bis 5 Gew.-%, vorzugsweise 0,025 bis 3 Gew.-%, insbesondere 0,05 bis 3 Gew.-%, bezogen auf das Gewicht der Komponente (a) verwendet.

Das Gewichtsverhältnis der Komponenten (b)(ii) zu (b)(iii) beträgt vorzugsweise 4 : 1 bis 1:10, insbesondere 3:1 bis 1:6, beispielsweise 2:1 bis 1:3.

Die Pulverlackzusammensetzungen werden nach den üblichen Verfahren, insbesondere elektrostatisches Pulverspritzen, auf das Substrat aufgebracht. Das von der Spritzpistole abgesprühte Pulver wird an einer Hochspannungselektrode elektrostatisch aufgeladen und unter Wirkung der Luftströmung sowie der elektrostatischen Anziehungskraft an das Werkstück gezogen. Der Umgriff der Feldlinien sorgt dafür, dass auch Hinterschneidungen und Rückseiten beschichtet werden. Die aufgebrachten Partikel, die durch Coulombsche Kräfte haften, werden im Gasofen zusammengeschmolzen und ausgehärtet. Die bevorzugten Einbrenntemperaturen liegen zwischen 130 und 260° C, insbesondere zwischen 140 und 220°C, je nach der Reaktivität des filmbildenden Bindemittels (Harz/Härter-System) und der Ofenkonstruktion. Die Einbrennzeiten beziehungsweise Objekttemperaturen sind zweckmässig in einem Bereich von 2 bis 30 Minuten, wobei die Wärmekapazität des Substrats eine grosse Rolle spielt. Im Falle von UV-härtbaren Systemen wird nach dem Pulversprühvorgang die Pulverlackzusammensetzung beispielsweise mit Infrarot-Strahlung bei einer Temperatur von 50 bis 180°C geschmolzen. Anschliessend wird die Beschichtung mit UV-Licht, vorzugsweise vor dem Abkühlen, belichtet.

Bevorzugte Substrate sind metallische Substrate, wie beispielsweise Eisen, Stahl, Kupfer, Zink, Zinn, Magnesium, Silicium, Titan oder Aluminium, sowie deren Legierungen.

Eine bevorzugte Ausführungsform der vorliegenden Erfindung ist die Verwendung der Komponente (b) als Stabilisator zur Verminderung der Verfärbung von thermisch, insbesondere in Gasöfen, härtbaren Pulverlackzusammensetzungen.

Die vorliegende Erfindung betrifft auch ein Verfahren zur Verminderung der Verfärbung von thermisch härtbaren Pulverlackzusammensetzungen, das dadurch gekennzeichnet ist, dass man diesen mindestens eine Komponente (b)(i) oder eine Mischung enthaltend eine Komponente (b)(ii) und eine Komponente (b)(iii) einverleibt oder auf diese aufbringt.

Ebenso betrifft die vorliegende Erfindung ein Verfahren zum Härten von Pulverlackzusammensetzungen enthaltend die Komponenten (a) und (b), dadurch gekennzeichnet, dass die Härtung in einem Gasofen durchgeführt wird.

Ein weiterer Gegenstand der Erfindung betrifft auch die nach den obigen Verfahren aufgebrachten und gehärteten Lackfilme.

Die Herstellung einer Pulverlackzusammensetzung mit den erfindungsgemässen Komponenten (a) und (b) kann nach den üblichen Methoden erfolgen. Eine gute Beschreibung der Vorgänge und Maschinen ist in T.A. Misev's Buch: "Powder Coatings: Chemistry and Technology", Verlag J.Wiley & Sons, Chichester im Kapitel 5 zu finden.

In der Regel werden alle Komponenten der Pulverlackzusammensetzung ausgewogen und in einem geeigneten Mischer zusammengemischt. Hierfür werden Taumelmischer, Kegelmischer, Doppelkegelmischer, Horizontalmischer, Blenders sowie Rührwerke wie Planetenmischer verwendet.

Die Formulierung wird zunächst in einem geheizten Extruder verarbeitet damit eine möglichst homogene, geschmolzene Masse erhalten wird. Geeignete Geräte hierfür sind Einzelwellen-Kokneter, Doppelschneckenextruder und Planetenextruder. Die Dosierung erfolgt meistens über einen Schneckenförderer, ein Förderband oder eine Schüttelrinne bei einer Temperatur von 70-140°C, insbesondere 80-110°C. Nach dem Extrudieren wird die heisse Masse ausgewalzt und gekühlt, z.B. auf einem Kühlband. Wenn die Masse erstarrt ist, wird sie zerbrochen und anschliessend gemahlen. Geeignete Mahlwerke sind Stiftmühlen, Ultrazentrifugalmühlen, Jetmühlen und ganz besonders Klassifiziermühlen. Im Anschluss wird das Pulver klassifiziert und bevorzugt gesiebt. Vor dem Sieben können auch Antiklumpmittel wie beispielsweise Kieselgel oder Aluminiumoxid, oder Effektpigmente wie beispielsweise Aluminium, Bronze oder Glimmer zugegeben werden.

Die durchschnittliche Teilchengrösse des Pulverlacks der vorliegenden Erfindung beträgt 5 bis 200 µm, insbesondere 10 bis 100 µm, z.B. 15 bis 75 µm.

Kürzlich sind auch andere Pulverlackherstellungsverfahren (EP-B-368 851 oder WO-A-92/00342) bekannt geworden, welche sich auch für diese Erfindung anwenden lassen. Dabei wird die bereits vorgemischte Formulierung oder das Extrudat einem geheizten Drehrohr zugegeben und auf einem Drehteller herausgeschleudert. Am Rand des Tellers werden kleine, runde nahezu monodisperse Tropfen gebildet, die an gekühlter Luft erstarren bevor sie zu Boden fallen.

Ein neues Verfahren zur Herstellung von Pulverlackzusammensetzungen besteht darin, dass die Komponenten (a) und (b) in superkritischem Kohlendioxid gemischt werden und anschliessend das Kohlendioxid durch Sprühtrocknung oder Verdampfung entfernt wird (siehe US-A-4 414 370 oder US-A-4 529 787). Auch für solche Herstellungsverfahren für Pulverlackzusammensetzungen sind die Stabilisatoren [Komponente (b)] der vorliegenden Erfindung bestens geeignet.

Die Applikation der Pulverlacke erfolgt nach den praxisüblichen Methoden. Es können z.B. Koronapistolen, sowie triboelektrische Spritzpistolen verwendet werden. Ferner sind alle Varianten des Wirbelsinterverfahrens mit und ohne elektrostatische Aufladung anwendbar. Für thermoplastische Pulverlacke sind auch Flammspritzverfahren anwendbar.

Das Einbrennen der Pulverlackzusammensetzung kann neben den in der vorliegenden Anmeldung im Vordergrund stehenden Gasöfen auch zusätzlich mittels Infrarotheizung oder durch elektrische Heizkörper erfolgen.

In Fällen, worin eine der Komponenten (b)(i), (b)(ii) oder (b)(iii) entweder ein Feststoff mit einem Schmelzpunkt der beispielsweise tiefer als 50°C ist, oder bei Raumtemperatur eine Flüssigkeit darstellt, können Probleme in der Handhabung auftreten, weil flüssige oder klebrige Komponenten nur schwer zusammengemischt und schlecht einem Extruder zugeführt werden können. Wenn eine der Komponenten (b)(i), (b)(ii) oder (b)(iii) einen Feststoff mit einem Schmelzpunkt der beispielsweise höher als 120°C ist oder der Feststoff eine hohe Schmelzviskosität aufweist, können ebenfalls Handhabungsschwierigkeiten auftreten. In solchen Fällen ist es nützlich, dass die Komponenten (b)(i), (b)(ii) oder (b)(iii) in Form eines Masterbatches eingesetzt werden können.

Ein Masterbatch ist im wesentlichen ein Konzentrat der Komponente (b) dispergiert oder vorzugsweise gelöst in einem Harz. Das Harz, das die Komponente (a) bildet, ist beispielsweise eine Polyesterharz, eine Epoxidharz oder ein Polyacrylatharz. Die Menge an Komponente (b) die eine Masterbatch enthalten kann, wird nur durch die Löslichkeit und physikalische Eigenschaften des Masterbatches wie beispielsweise Neigung zur Klumpenbildung bestimmt. Ein Masterbatch enthält zweckmässig die Komponente (b) in einer Menge von 5 bis 90 Gew.-%, insbesondere 5 bis 60 Gew.-%, z.B. 5 bis 30 Gew.-% bezüglich Gesamtgewicht des Masterbatches.

Bereits bei der Herstellung der Harze kann bereits ein Masterbatch hergestellt werden. So kann beispielsweise bei der Herstellung von Polyestern, die bei ca. 240°C hergestellt werden, die Komponente (b) während dem Abkühlvorgang zugegeben werden. Die Komponente (b) kann das Harz bereits während der Herstellung vor Oxidation schützen indem die Komponte (b) vor der Kondensationsreaktion den Monomeren zugegeben wird. Besonders bevorzugt sind dabei diejenigen erfindungsgemässen Komponenten (b), die bei der Kondensationsreaktion chemisch inert sind. Die zusätzlichen Komponenten des Pulverlackes wie beispielsweise Verlaufshilfsmittel oder Entgasungsmittel können auch in den Masterbatch eingearbeitet werden.

Die vorliegende Erfindung betrifft deshalb auch einen Masterbatch enthaltend ein Harz und mindestens eine Komponente (b).

Die Komponente (b) kann auch auf ein Trägermaterial aufgebracht werden. Dies ist beispielsweise besonders dann zweckmässig, wenn die Komponente (b) eine Flüssigkeit oder ein weiches, klebriges Harz darstellt. Es wird zweckmässig nur soviel Trägermaterial verwendet bis ein rieselfähiges und gut zumischbares Pulver entsteht. Die Komponente (b) kann mit oder ohne Lösungsmittel auf das Trägermaterial aufgedüst werden. Bevorzugte Trägermaterialien stellen poröse Feststoffe mit niedriger Teilchengrösse und hohen Oelabsorptionszahlen dar. Von besonderer Bedeutung sind beispielsweise Aluminiumoxid oder Kieselgel.

Die folgenden Beispiele erläutern die Erfindung weiter. Angaben in Teilen oder Prozenten beziehen sich auf das Gewicht.

### Beispiel 1: Messung der Verfärbung von in Gasöfen gehärteten Pulverlacken auf Basis Polyester/Hydroxyalkylamid.

Zur Herstellung der Pulverlackzusammensetzung auf Basis Polyester/Hydroxyalkylamid werden 560 g Polyester Grilesta®P 7612 (Ems Chemie AG), 30 g Primid® XL552 (Ems Chemie AG), 8 g Resiflow® PV 88 (Worlée Chemie GmbH), 2 g Benzoin (Fluka AG), 400 g Titandioxid Typ 2160 (Kronos) und die in der Tabelle 1 angegebene Menge der Stabilisatoren gemischt.

Die so eingewogenen Komponenten werden unter Verwendung eines Planetenrührers gemischt. Anschliessend wird das Gemisch auf einem Prism Extruder bei 300 Umdrehungen/-Minute und 100°C extrudiert und ausgewalzt. Die Pulverlackmasse wird mit einem Tischkutter grobzerkleinert und in einer Retsch ZM-1 Ultrazentrifugalmühle mit einem 0,25 mm Ringlochsieb bei Geschwindigkeitsstufe 2 gemahlen. Schliesslich wird das Pulver durch ein 125 µm Sieb auf einer Kreiselsiebmaschine gesiebt.

Die fertige Pulverlackzusammensetzung wird mit einer ESB-Wagner-Corona-Becherpistole auf Typ R Stahlbleche der Firma Q-Panel elektrostatisch auf eine Schichtdicke von 120 µm gespritzt. Die beschichteten Bleche werden nur während einer Minute auf 160°C erhitzt, damit die Pulverschicht schmilzt aber nicht härtet. Die Proben werden anschliessend in einem Gasofen bei 200°C während 45 Minuten eingebrannt und die Farbe beziehungsweise der Yellowness Index (YI) nach ASTM D 1925-70 bestimmt. Niedrige Yl-Werte bedeuten wenig Verfärbung, hohe Yl-Werte starke Verfärbung der Proben. Je geringer die Verfärbung, desto wirksamer ist der Stabilisator bzw. das Stabilisatorgemisch. Die Resultate sind in Tabelle 1 zusammengefasst.

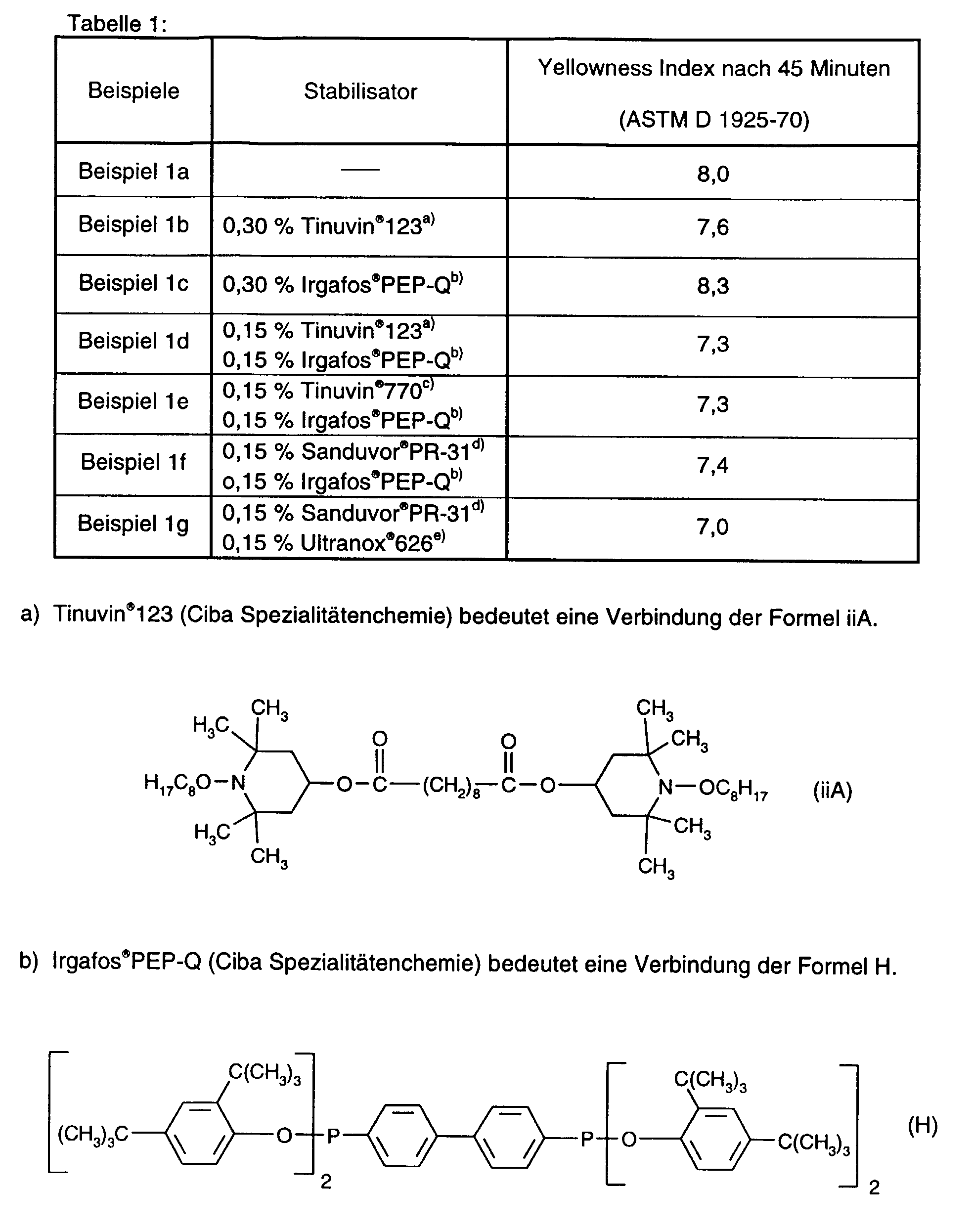

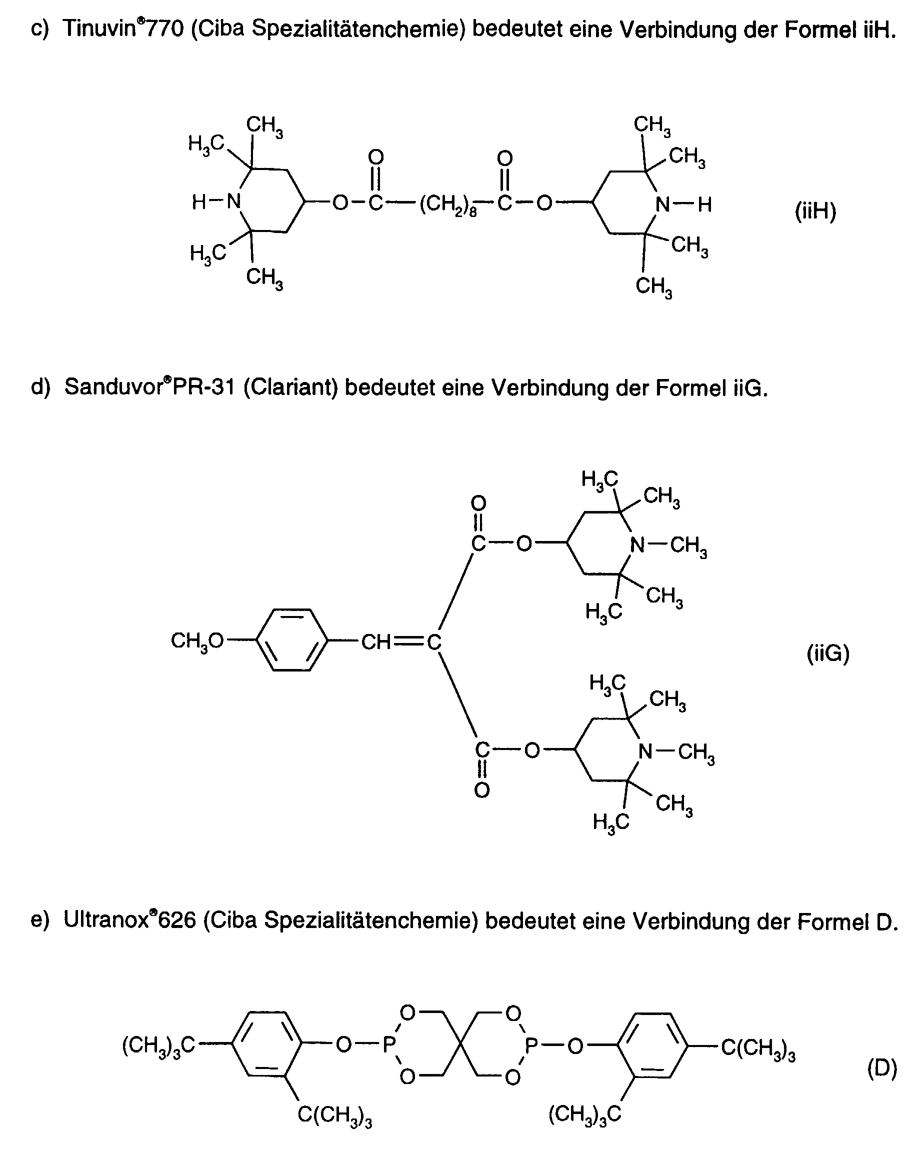

### Beispiel 2: Messung der Verfärbung von in Gasöfen gehärteten Pulverlacken auf Basis eines Epoxidharzes.

Zur Herstellung der Pulverlackzusammensetzung auf Basis eines Epoxidharzes werden in Analogie zu Beispiel 1 900 g Araldit®GT 7004 (Ciba Spezialitätenchemie), 100 g Araldit®GT 3032 (Ciba Spezialitätenchemie), 48 g Araldit®HT 2844 (Ciba Spezialitätenchemie), 3 g Benzoin (Fluka), 500 g Titandioxid Typ R-KB-5 (Bayer) und die in der Tabelle 2 angegebene Menge der Stabilisatoren gemischt.

Die fertige Pulverlackzusammensetzung wird mit einer ESB-Wagner-Corona-Becherpistole auf Typ R Stahlbleche der Firma Q-Panel elektrostatisch auf eine Schichtdicke von 120 µm gespritzt. Die beschichteten Bleche werden nur während einer Minute auf 160°C erhitzt, damit die Pulverschicht schmilzt aber nicht härtet. Die Proben werden anschliessend in einem Gasofen bei 200°C während 20 Minuten eingebrannt und die Farbe beziehungsweise der Yellowness Index (Yl) nach ASTM D 1925-70 bestimmt. Niedrige Yl-Werte bedeuten wenig Verfärbung, hohe Yl-Werte starke Verfärbung der Proben. Je geringer die Verfärbung, desto wirksamer ist der Stabilisator bzw. das Stabilisatorgemisch. Die Resultate sind in Tabelle 2 zusammengefasst.

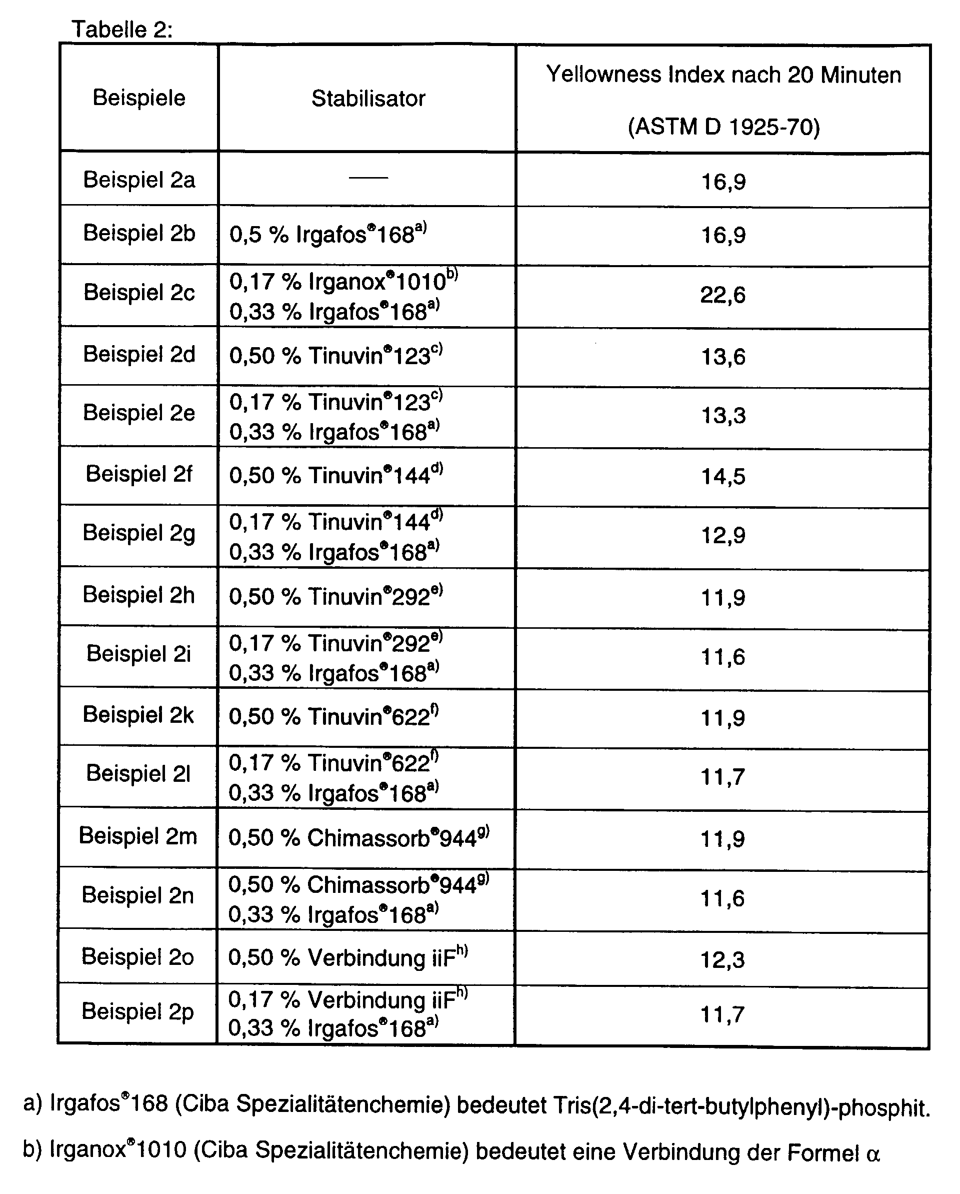

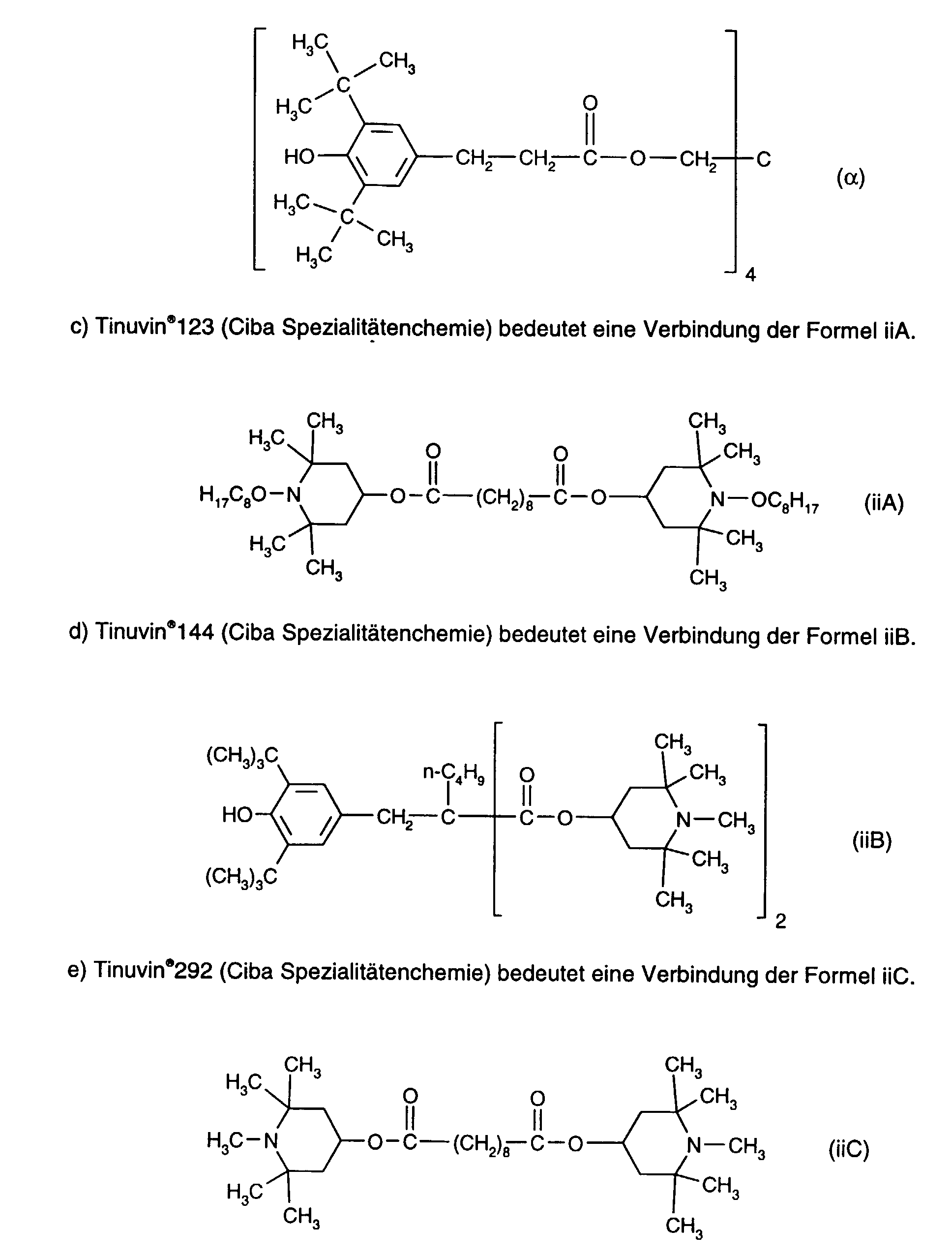

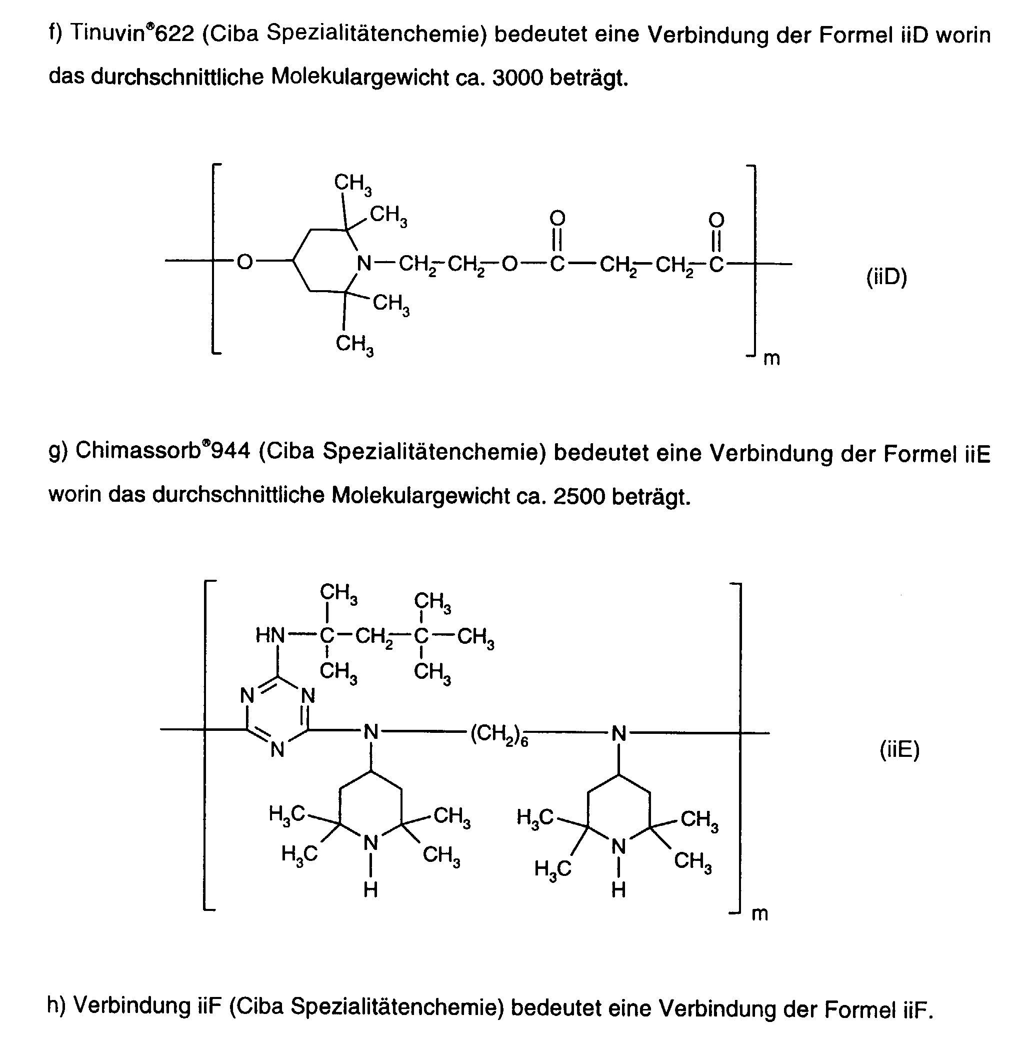

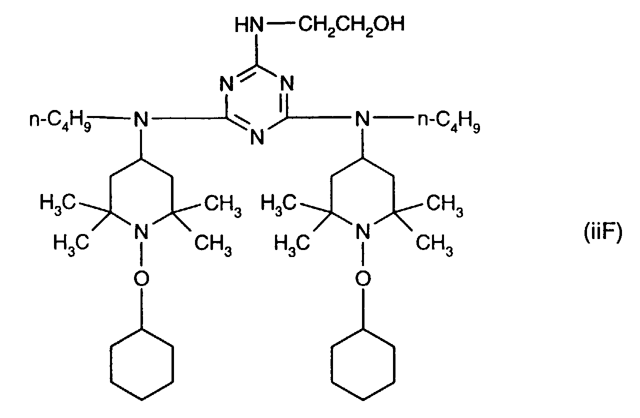

### Beispiel 3: Messung der Verfärbung von in Gasöfen gehärteten Pulverlacken auf Basis eines Epoxidharzes.

Zur Herstellung der Pulverlackzusammensetzung auf Basis eines Epoxidharzes werden in Analogie zu Beispiel 1 900 g Araldit®GT 7004 (Ciba Spezialitätenchemie), 100 g Araldit®GT 3032 (Ciba Spezialitätenchemie), 48 g Araldit®HT 2844 (Ciba Spezialitätenchemie), 3 g Benzoin (Fluka), 500 g Titandioxid Typ R-KB-5 (Bayer) und die in der Tabelle 3 angegebene Menge der Stabilisatoren eingewogen und anschliessend unter Verwendung eines Planetenrührers zusammengemischt. Anschliessend wird das Gemisch auf einem Buss PLK 46L Kokneter bei 125 Umdrehungen/Minute und Temperaturen von 40°C (Welle und Einzugszone) und 80°C (Knetzone) extrudiert und ausgewalzt. Während des Extrudierens beträgt die Schmelztemperatur ca. 91°C. Die Pulverlackzusammensetzung wird mit einem "Tischcutter" grobzerkleinert und in einer Retsch ZM-1 Ultrazentrifugalmühle mit einem 0,75 mm Ringlochsieb bei 15000 Umdrehungen/Minute zerkleinert. Schliesslich wird das Pulver durch ein 125 µm Sieb auf einer Kreiselsiebmaschine gesiebt. Die durchschnittliche Teilchengrösse des spritzfertigen Pulvers beträgt ca. 30 µm.

Die fertige Pulverlackzusammensetzung wird mit einer ESB-Wagner triboelektrischen Becherpistole auf weisse "coil-coat" Aluminiumbleche in einer Schichtdicke von ca. 60 µm gespritzt. Die beschichteten Bleche werden nur während drei Minuten bei 160°C erhitzt, damit die Pulverschicht schmilzt aber nicht härtet. Die Proben werden anschliessend in zwei verschiedenen Industriegasöfen bei 180°C während ca. 25 Minuten eingebrannt und die Farbe beziehungsweise der Yellowness Index (Yl) nach ASTM D 1925-88 bestimmt. Niedrige Yl-Werte bedeuten wenig Verfärbung, hohe Yl-Werte starke Verfärbung der Proben. Je geringer die Verfärbung, desto wirksamer ist der Stabilisator bzw. das Stabilisatorengemisch. Die Resultate sind in Tabelle 3 zusammengefasst.

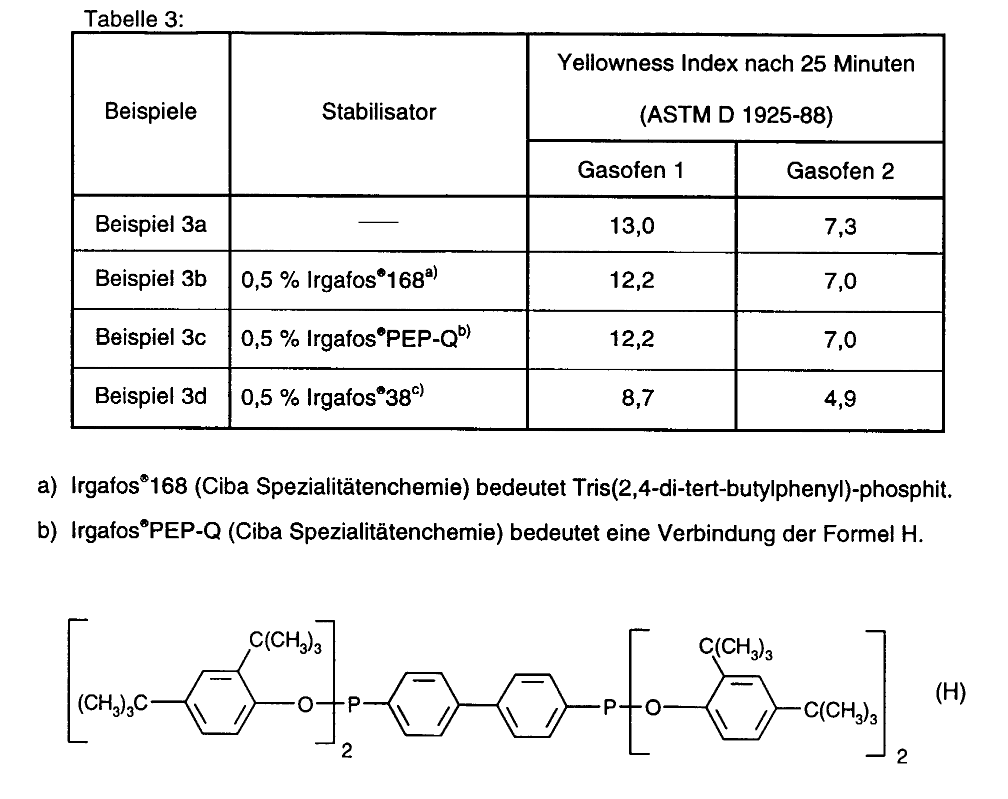

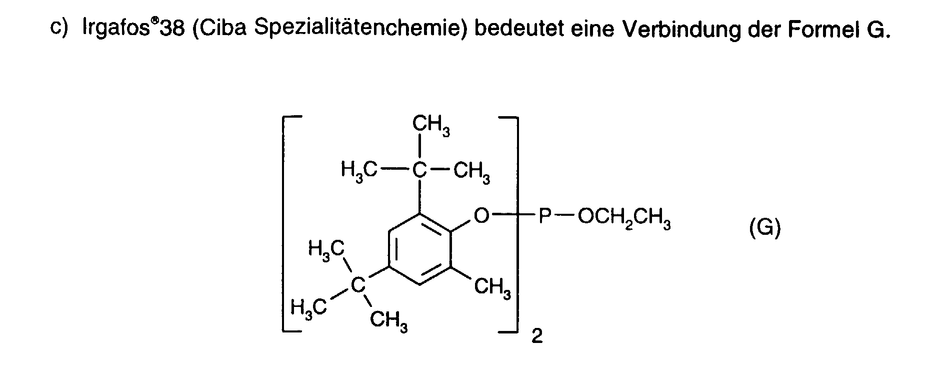

### Beispiel 4: Messung der Verfärbung von in Gasöfen gehärteten Pulverlacken auf Basis eines Polyester/Epoxid(60/40)-Harzes.

Zur Herstellung der Pulverlackzusammensetzung auf Basis eines Polyester/Epoxid(60/40)-Harzes werden in Analogie zu Beispiel 1 1184 g Crylcoat®360 (carboxyfunktionelles Polyester der Firma UCB S.A., Drogenbos, Belgien), 790 g Araldit®GT 7004 (Ciba Spezialitätenchemie), 3 g Benzoin (Fluka), 1000 g Titandioxid Typ R-KB-5 (Bayer), 20 g Resiflow®PV 88 (Worlée Chemie GmbH) und die in der Tabelle 4 angegebene Menge der Stabilisators eingewogen und anschliessend unter Verwendung eines Planetenrührers zusammengemischt. Anschliessend wird das Gemisch auf einem Buss PLK 46L Kokneter bei 125 Umdrehungen/Minute und Temperaturen von 40°C (Welle und Einzugszone) und 80°C (Knetzone) extrudiert und ausgewalzt. Während des Extrudierens beträgt die Schmelztemperatur ca. 91°C. Die Pulverlackzusammensetzung wird mit einem "Tischcutter" grobzerkleinert und in einer Retsch ZM-1 Ultrazentrifugalmühle mit einem 0,75 mm Ringlochsieb bei 15000 Umdrehungen/Minute zerkleinert. Schliesslich wird das Pulver durch ein 125 µm Sieb auf einer Kreiselsiebmaschine gesiebt. Die durchschnittliche Teilchengrösse des spritzfertigen Pulvers beträgt ca. 30 µm.

Die fertige Pulverlackzusammensetzung wird mit einer ESB-Wagner triboelektrischen Becherpistole auf weisse "coil-coat" Aluminiumbleche in einer Schichtdicke von ca. 60 µm gespritzt. Die beschichteten Bleche werden nur während drei Minuten bei 160°C erhitzt, damit die Pulverschicht schmilzt aber nicht härtet. Die Proben werden anschliessend in einem Gasofen mit einer NO₂-Konzentration von 80 ppm bei 200°C während ca. 25 Minuten eingebrannt und die Farbe des Lackes beziehungsweise der Yellowness Index (Yl) nach ASTM D 1925-88 bestimmt. Niedrige Yl-Werte bedeuten wenig Verfärbung, hohe Yl-Werte starke Verfärbung der Proben. Je geringer die Verfärbung, desto wirksamer ist der Stabilisator. Die Resultate sind in Tabelle 4 zusammengefasst.

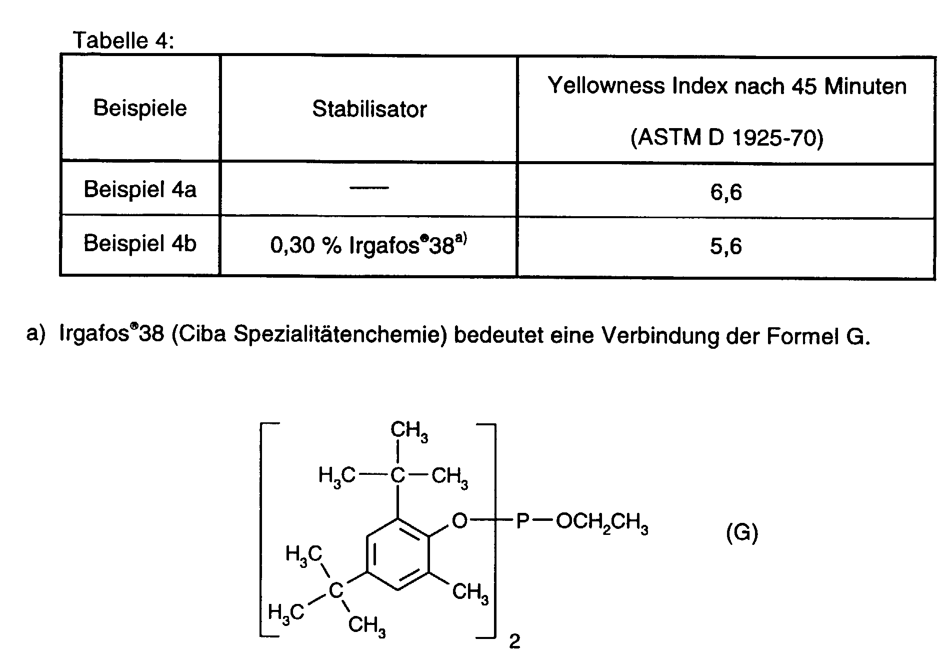

## Patentansprüche

1. Pulverlackzusammensetzung enthaltend
a) ein organisches filmbildendes Bindemittel, und
b) als Stabilisator
(i) mindestens eine Verbindung der Formel I 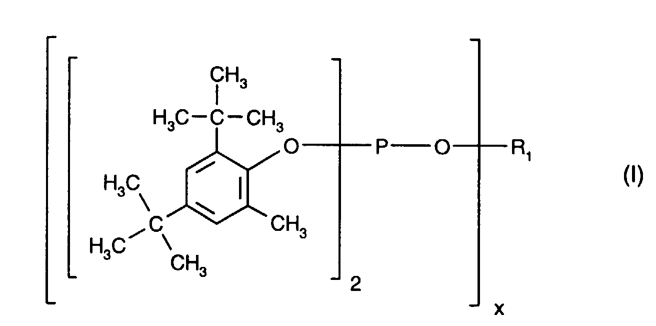 worin x 1, 2 oder 3 ist, und
wenn x 1 ist,
R₁ C₁-C₃₀-Alkyl, mit Halogen, -COOR₂, -CN, -NR₃R₄ oder -CONR₃R₄ substituiertes C₁-C₁₈-Alkyl; durch -NR₅-, Sauerstoff oder Schwefel unterbrochenes C₂-C₁₈-Alkyl; C₃-C₁₈-Alkenyl, C₅-C₁₂-Cycloalkyl, Phenyl-C₁-C₄-alkyl, unsubstituiertes oder mit C₁-C₁₂-Alkyl, Halogen, Phenyl-C₁-C₄-alkyl oder/und C₁-C₄-Alkoxy substituiertes Phenyl; Naphthyl, einen Rest der Formel 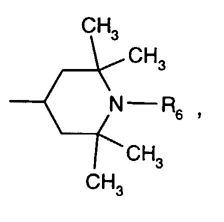 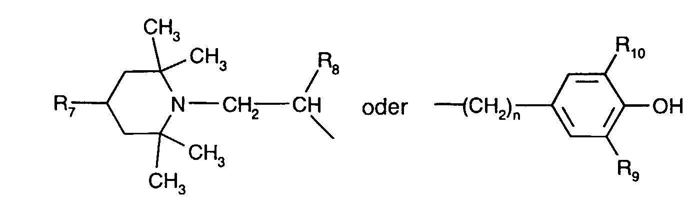 darstellt,
R₂, R₃, R₄ und R₅ unabhängig voneinander Wasserstoff, C₁-C₁₈-Alkyl, C₅-C₁₂-Cycloalkyl oder Phenyl-C₁-C₄-alkyl bedeuten,
R₆ Wasserstoff, Methyl, Allyl oder Benzyl darstellt,
R₇ Wasserstoff oder -OR₁₁ bedeutet,
R₈ Wasserstoff oder Methyl ist,
R₉ und R₁₀ unabhängig voneinander Wasserstoff oder C₁-C₈-Alkyl darstellen, R₁₁ Wasserstoff oder C₁-C₃₀-Alkyl bedeutet, und
n 3 bis 6 darstellt, mit der Bedingung, dass R₁ keinen Phenylrest darstellt, der in beiden ortho Positionen zum Kohlenstoffatom, welches an das Sauerstoffatom gebunden ist, substituiert ist; und
wenn x 2 ist,
R₁ C₂-C₁₈-Alkylen, durch -NR₅-, Sauerstoff oder Schwefel unterbrochenes C₂-C₁₈-Alkylen; oder einen Rest 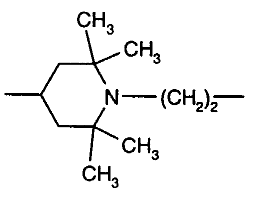 darstellt, und
wenn x 3 ist,
R₁ C₃-C₁₂-Alkantriyl oder N[(CH₂)ₘ-]₃ bedeutet, und
m 1 bis 4 darstellt; oder
ii) mindestens eine Verbindung aus der Gruppe der sterisch gehinderten Amine, und
iii) mindestens eine Verbindung aus der Gruppe der organischen Phosphite oder Phosphonite.

2. Pulverlackzusammensetzung gemäss Anspruch 1, worin die Pulverlackzusammensetzung eine thermisch härtbare Pulverlackzusammensetzung darstellt.

3. Pulverlackzusammensetzung gemäss Anspruch 1, worin die Pulverlackzusammensetzung eine in Gasöfen härtbare Pulverlackzusammensetzung darstellt.

4. Pulverlackzusammensetzung gemäss Anspruch 1, worin die Komponente (b)(i) eine Verbindung der Formel I darstellt, worin, wenn x 1 ist,
R₁ C₁-C₂₀-Alkyl, mit Halogen, -COOR₂, -CN oder -NR₃R₄ substituiertes C₁-C₈-Alkyl; durch Sauerstoff oder Schwefel unterbrochenes C₂-C₈-Alkyl; C₃-C₁₈-Alkenyl, C₅-C₈-Cycloalkyl, unsubstituiertes oder mit C₁-C₁₂-Alkyl oder Phenyl-C₁-C₄-alkyl substituiertes Phenyl; Naphthyl, einen Rest der Formel 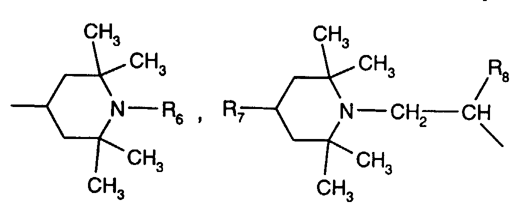 oder 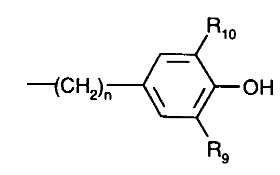 darstellt,
R₂, R₃, R₄ und R₅ unabhängig voneinander Wasserstoff, C₁-C₁₂-Alkyl, C₅-C₈-Cycloalkyl oder Phenyl-C₁-C₄-alkyl bedeuten,
R₆ Wasserstoff oder Methyl darstellt,
R₇ Wasserstoff oder -OR₁₁ bedeutet,
R₈ Wasserstoff oder Methyl ist,
R₉ und R₁₀ unabhängig voneinander Wasserstoff oder C₁-C₆-Alkyl darstellen,
R₁₁ Wasserstoff oder C₁-C₂₅-Alkyl bedeutet, und
n 3 bis 5 darstellt, und
wenn x 2 ist,
R₁ C₂-C₁₂-Alkylen, Sauerstoff oder Schwefel unterbrochenes C₂-C₁₂-Alkylen; oder einen Rest 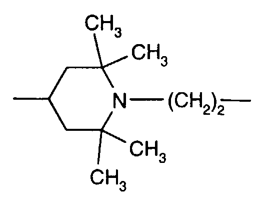 darstellt, und
wenn x 3 ist,
R₁ N[(CH₂)ₘ-]₃ bedeutet, und
m 2 darstellt.

5. Pulverlackzusammensetzung gemäss Anspruch 1, worin die Komponente (b)(i) eine Verbindung der Formel I darstellt, worin, wenn x 1 ist, R₁ C₁-C₄-Alkyl bedeutet.

6. Pulverlackzusammensetzung gemäss Anspruch 1, worin die Komponente (b)(ii) mindestens einen Rest der Formel II oder III 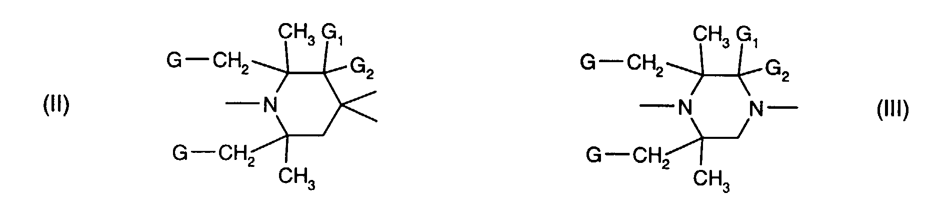 enthält, worin
G Wasserstoff oder Methyl ist, und
G₁ und G₂ Wasserstoff, Methyl oder gemeinsam Sauerstoff bedeuten.

7. Pulverlackzusammensetzung gemäss Anspruch 1, worin die Komponente (b)(ii) eine Verbindung der Formel iiA, iiB, iiC, iiD, iiE, iiF, iiG, iiH oder iiK 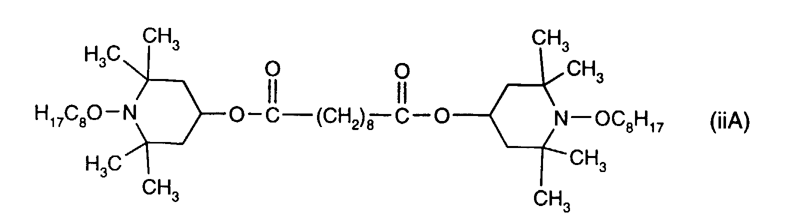 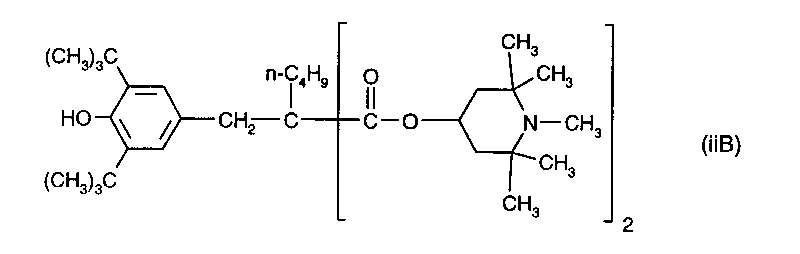 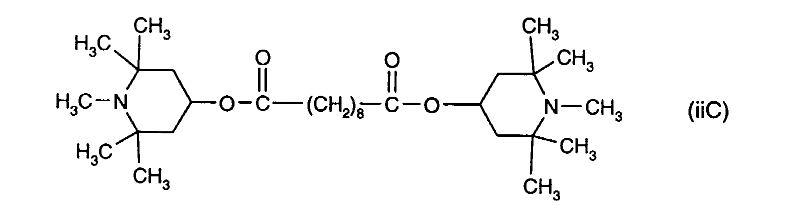 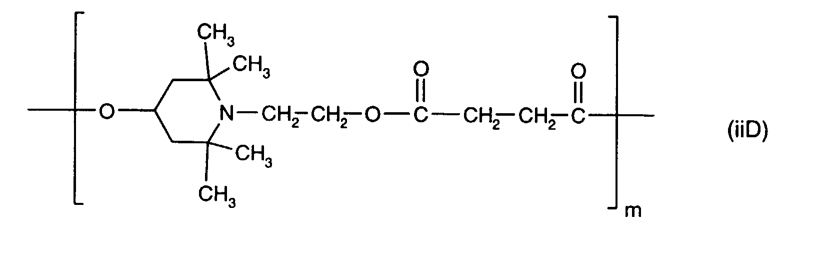 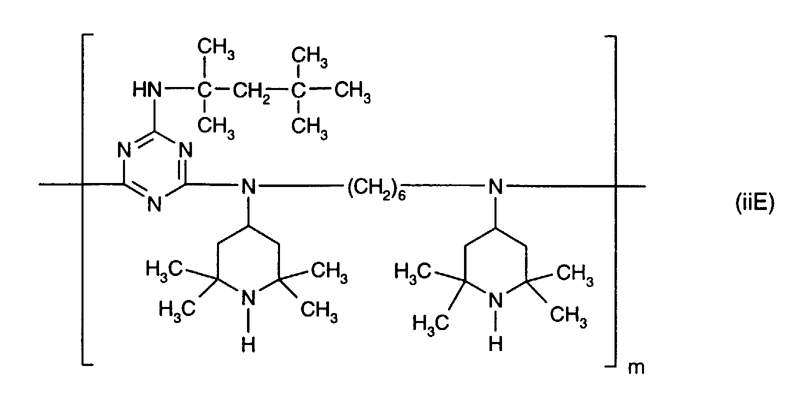 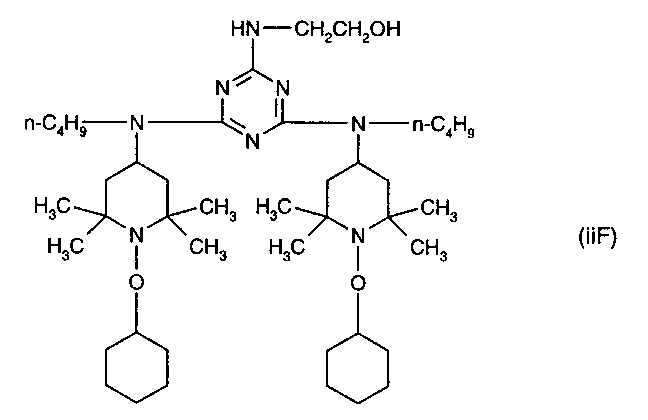 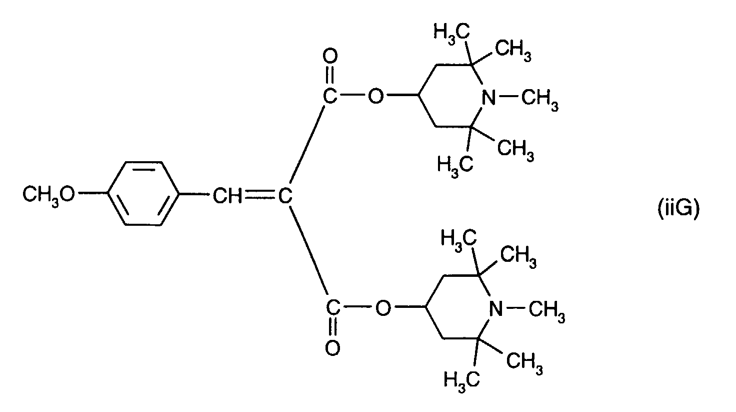 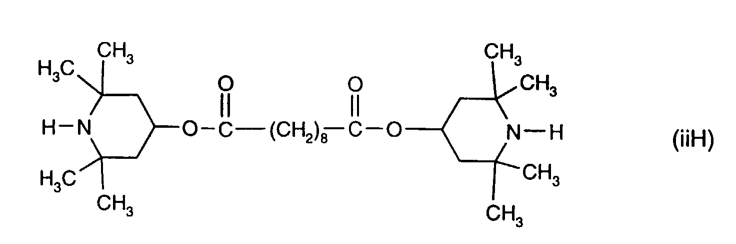 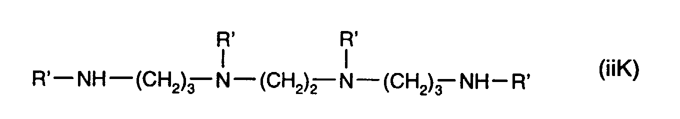
worin R' = 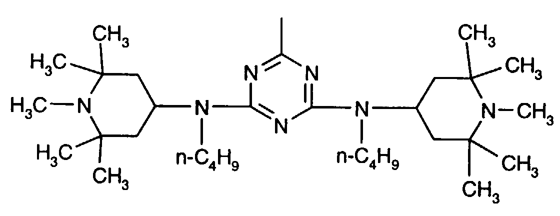 darstellt, und
m eine Zahl aus dem Bereich von 2 bis 200 bedeutet.

8. Pulverlackzusammensetzung gemäss Anspruch 1, worin die Komponente (b)(iii) die Komponente (b)(i) gemäss Anspruch 1 bedeutet.

9. Pulverlackzusammensetzung gemäss Anspruch 1, worin die Komponente (b)(iii) eine Verbindung der Formeln 1 bis 7 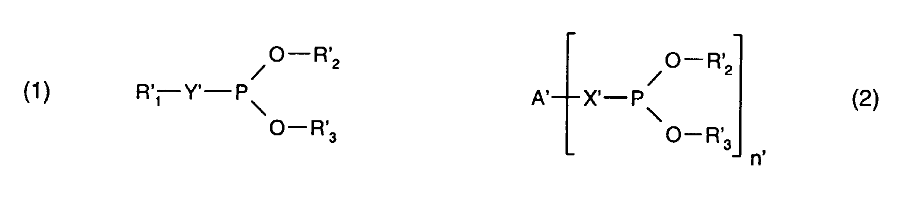 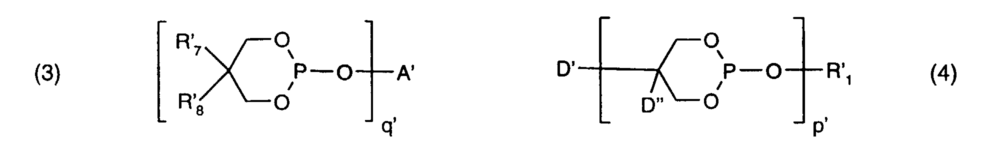 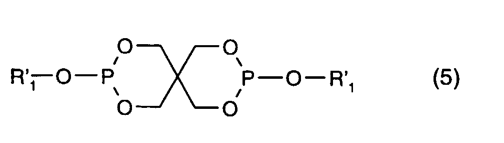 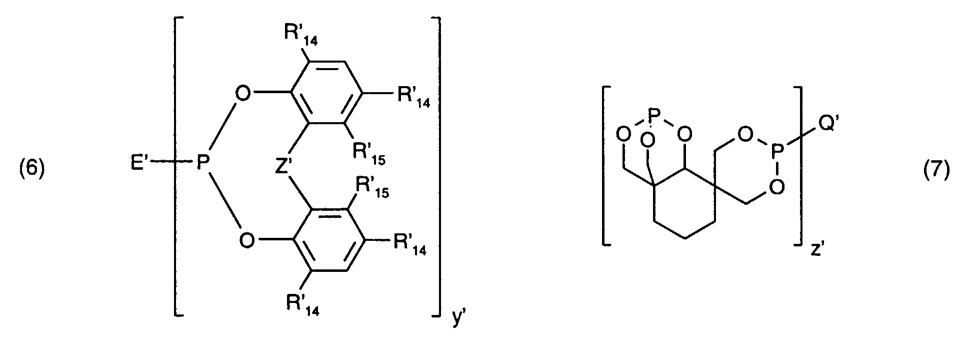 worin die Indices ganzzahlig sind und
n' für 2, 3 oder 4; p' für 1 oder 2; q' für 2 oder 3; r' für 4 bis 12; y' für 1, 2 oder 3; und z' für 1 bis 6 steht;
A', wenn n' 2 ist, C₂-C₁₈-Alkylen; durch Sauerstoff, Schwefel oder -NR'₄- unterbrochenes C₂-C₁₂-Alkylen; einen Rest der Formel 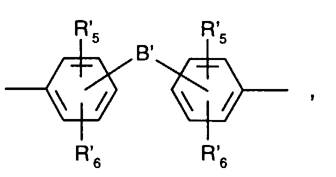 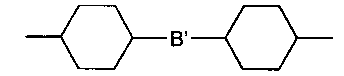 oder Phenylen ist;
A', wenn n' 3 ist, einen Rest der Formel -C_{r'}H_{2r'-1}- bedeutet;
A', wenn n' 4 ist, 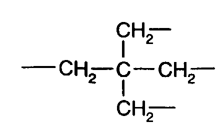 darstellt;
A" die Bedeutung von A', wenn n'2 ist, hat;
B' eine direkte Bindung, -CH₂-, -CHR'₄-, -CR'₁R'₄-, Schwefel, C₅-C₇-Cycloalkyliden oder mit 1 bis 4 C₁-C₄-Alkylresten in Position 3, 4 und/oder 5 substituiertes Cyclohexyliden bedeutet;
D', wenn p' 1 ist, C₁-C₄-Alkyl und, wenn p'2 ist, -CH₂OCH₂- bedeutet;
D", wenn p' 1 ist, C₁-C₄-Alkyl darstellt;
E', wenn y' 1 ist, C₁-C₁₈-Alkyl, -OR'₁ oder Halogen ist;
E', wenn y 2 ist, -O-A"-O- darstellt,
E', wenn y 3 ist, einen Rest der Formel R'₄C(CH₂O-)₃ oder N(CH₂CH₂O-)₃ bedeutet;
Q' für den Rest eines mindestens z'-wertigen Alkohols oder Phenols steht, wobei dieser Rest über das Sauerstoffatom an das Phosphoratom gebunden ist;
R'₁, R'₂ und R'₃ unabhängig voneinander unsubstituiertes oder mit Halogen, -COOR'₄, -CN oder -CONR'₄R'₄ substituiertes C₁-C₁₈-Alkyl; durch Sauerstoff, Schwefel oder -NR'₄- unterbrochenes C₂-C₁₈-Alkyl; C₇-C₉-Phenylalkyl; C₅-C₁₂-Cycloalkyl, Phenyl oder Naphthyl; mit Halogen, 1 bis 3 Alkylresten oder Alkoxyresten mit insgesamt 1 bis 18 Kohlenstoffatomen oder mit C₇-C₉-Phenylalkyl substituiertes Phenyl oder Naphthyl; oder einen Rest der Formel 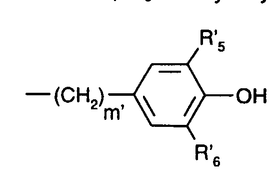 bedeuten, worin m' eine ganze Zahl aus dem Bereich 3 bis 6 bedeutet;
R'₄ Wasserstoff, C₁-C₁₈-Alkyl, C₅-C₁₂-Cycloalkyl oder C₇-C₉-Phenylalkyl darstellt,
R'₅ und R'₆ unabhängig voneinander Wasserstoff, C₁-C₈-Alkyl oder C₅-C₆-Cycloalkyl bedeuten,
R'₇ und R'₈, wenn q' 2 ist, unabhängig voneinander C₁-C₄-Alkyl oder zusammen einen 2,3-Dehydro-pentamethylenrest darstellen; und
R'₇ und R'₈, wenn q' 3 ist, Methyl bedeuten;
R'₁₄ Wasserstoff, C₁-C₉-Alkyl oder Cyclohexyl darstellt,
R'₁₅ Wasserstoff oder Methyl ist, und im Fall, wenn mehrere Reste R'₁₄ und R'₁₅ vorhanden sind, diese Reste gleich oder verschieden sind,
X' und Y' jeweils eine direkte Bindung oder Sauerstoff darstellen,
Z' eine direkte Bindung, Methylen, -C(R'₁₆)₂- oder Schwefel bedeutet, und
R'₁₆ C₁-C₈-Alkyl darstellt.

10. Pulverlackzusammensetzung gemäss Anspruch 1, worin die Komponente (b)(iii) Tris-(2,4-di-tert-butylphenyl)-phosphit, Tris(nonylphenyl)-phosphit oder eine Verbindung der Formel A, B, C, D, E, F, G, H, I, K oder L 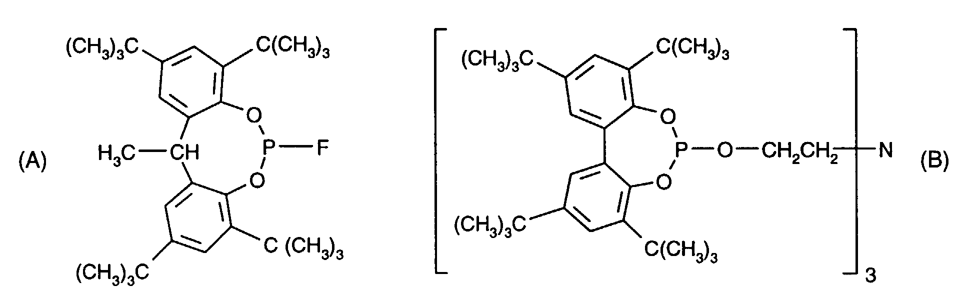 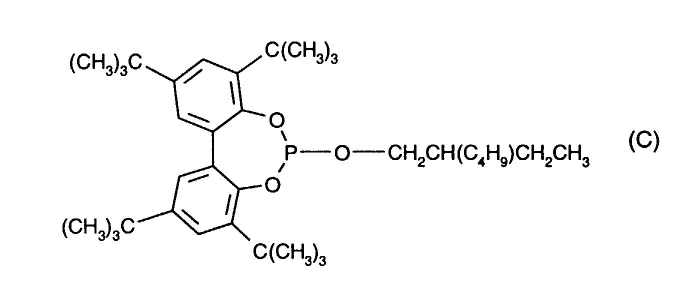 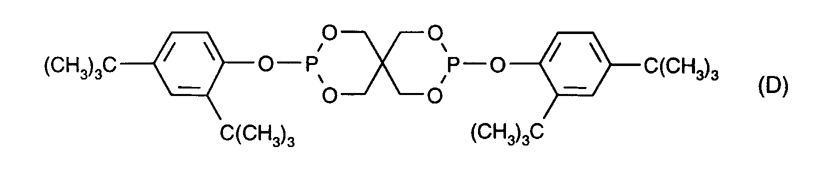 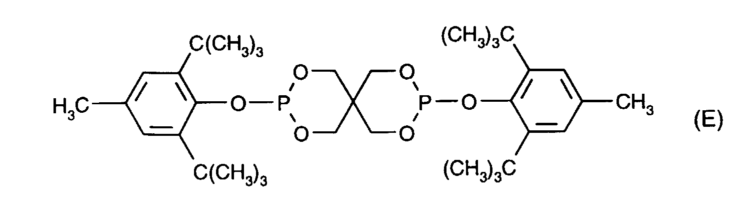 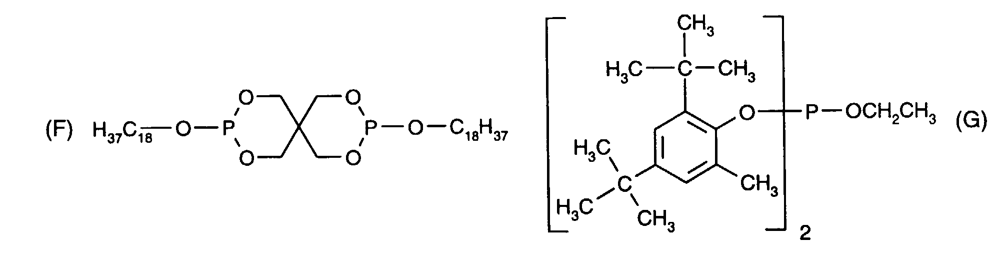 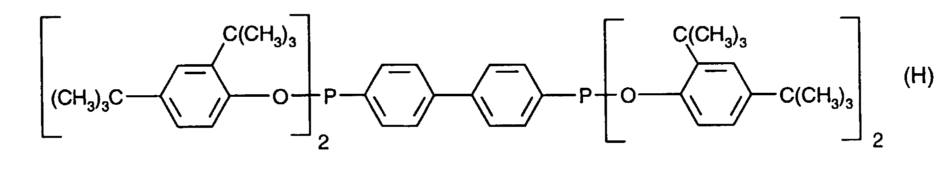 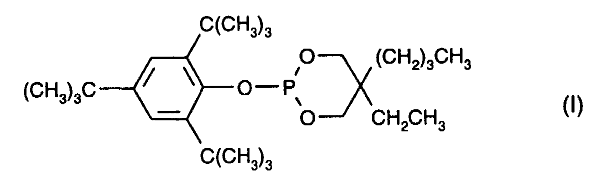 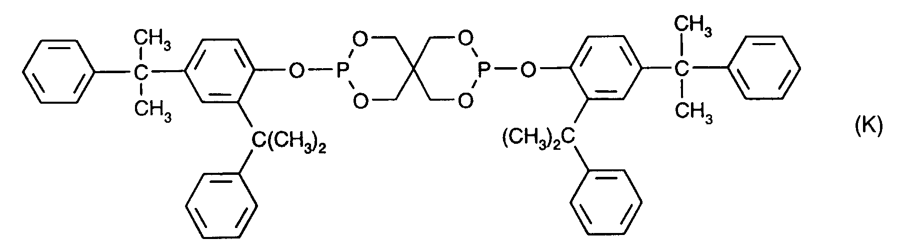 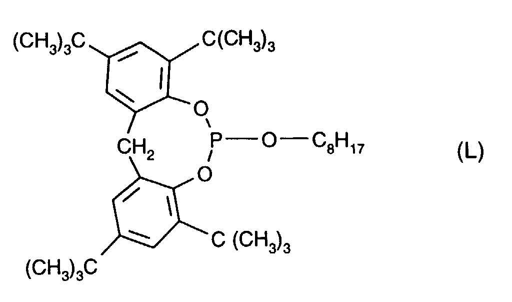 bedeutet.

11. Pulverlackzusammensetzung gemäss Anspruch 1, worin die Komponente (a) ein Epoxidharz, ein Polyester-Hydroxyalkylamid, ein Polyester-Glykoluril, ein Epoxid-Polyesterharz, ein Polyester-Triglycidylisocyanurat, ein hydroxyfuntionelles Polyester-blockiertes Polyisocyanat, ein hydroxyfunktionelles Polyester-Uretdion, ein Acrylatharz mit Härter oder eine Mischung solcher Harze ist.

12. Pulverlackzusammensetzung gemäss Anspruch 1, enthaltend neben den Komponenten (a) und (b) zusätzlich weitere Additive.

13. Pulverlackzusammensetzung gemäss Anspruch 12, enthaltend als weitere Additive zusätzlich eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren, Korrosionsschutzmittel oder Photoinitiatoren.

14. Pulverlackzusammensetzung gemäss Anspruch 12, enthaltend als weitere Additive phenolische Antioxidantien.

15. Pulverlackzusammensetzung gemäss Anspruch 1, worin die Komponente (b)(i) in einer Menge von 0,001 bis 10 %, die Komponente (b)(ii) in einer Menge von 0,001 bis 10 % und die Komponente (b)(iii) in einer Menge von 0,001 bis 10 % bezogen auf das Gewicht der Komponente (a) vorliegt.

16. Pulverlackzusammensetzung gemäss Anspruch 1, worin das Gewichtsverhältnis der Komponenten (b)(ii) zu (b)(iii) 4 : 1 bis 1 : 10 beträgt.

17. Bei der Härtung mit aus Verbrennungsgasen stammenden Stickoxiden in Kontakt stehende Pulverlackzusammensetzung enthaltend die Komponenten (a) und (b) gemäss Anspruch 1.

18. Verwendung der in Anspruch 1 definierten Komponente (b) zur Verminderung der Verfärbung von thermisch härtbaren Pulverlackzusammensetzungen (Einbrennlacken).

19. Verwendung gemäss Anspruch 18, worin die thermische Härtung in einem Gasofen durchgeführt wird.

20. Verfahren zur Verminderung der Verfärbung von thermisch härtbaren Pulverlackzusammensetzungen, dadurch gekennzeichnet, dass man diesen mindestens eine Komponente (b)(i) oder eine Mischung enthaltend eine Komponente (b)(ii) und eine Komponente (b)(iii) gemäss Anspruch 1 einverleibt oder auf diese aufbringt.

21. Verfahren zum Härten von Pulverlackzusammensetzungen enthaltend die Komponenten (a) und (b) gemäss Anspruch 1, dadurch gekennzeichnet, dass die Härtung in einem Gasofen durchgeführt wird.

22. Nach den Verfahren gemäss Ansprüchen 20 oder 21 aufgebrachter und gehärteter Lackfilm.
